# EUROPÄISCHE PATENTSCHRIFT

(11) **EP 2 359 453 B1**
(45) Veröffentlichungstag und Bekanntmachung des Hinweises auf die Patenterteilung: **09.04.2014**
(21) Anmeldenummer: 09756487.6
(22) Anmeldetag: 19.11.2009
(51) Int. Cl.: H02J 3/38, B60L 11/18

(54) **COMPUTERGESTÜTZTES VERFAHREN ZUR OPTIMIERUNG DER ENERGIENUTZUNG IN EINEM LOKALEN SYSTEM**
COMPUTER-SUPPORTED METHOD FOR OPTIMIZING ENERGY USAGE IN A LOCAL SYSTEM
PROCÉDÉ ASSISTÉ PAR ORDINATEUR PERMETTANT D'OPTIMISER L'UTILISATION DE L'ÉNERGIE DANS UN SYSTÈME LOCAL

(30) Priorität: 21.11.2008 DE 102008037575
(43) Veröffentlichungstag der Anmeldung: 24.08.2011
(73) Patentinhaber: EnBW Energie Baden-Württemberg AG, 76131 Karlsruhe (DE)
(72) Erfinder: ALBAYRAK, Sahin, 10587 Berlin (DE); MÜNCH, Wolfram, 76593 Gernsbach (DE); WALCH, Lars, 76307 Karlsbad (DE); NIEHAUS, Thorsten, 76185 Karlsruhe (DE); KESSLER, Alois, 75417 Mühlacker (DE); FREY, Hellmuth, 76227 Karlsruhe (DE)
(74) Vertreter: Meyer-Dulheuer, Karl-Hermann
(86) Internationale Anmeldenummer: PCT/EP2009/065468
(87) Internationale Veröffentlichungsnummer: WO 2010/057947

(56) Entgegenhaltungen:
- WO-A1-2006/132070
- WO-A1-2008/073453
- WO-A2-2007/065135
- WO-A2-2008/135043
- US-A1- 2005 125 243
- US-A1- 2007 282 495

## Beschreibung

Die Erfindung betrifft ein dezentrales System aus Energie-Verbrauchern und Energie-Quellen, deren Nutzung mittels eines computergestützten Verfahrens überwacht, gesteuert und optimiert wird.

Aus der US-amerikanischen Patentschrift mit der Nr. 7,373,222 B1 sind bereits ein System und eine Verfahren bekannt, die das dynamische Energie-Management erleichtern und die Verwendung von Energie optimieren sollen. Das System besteht aus Energie-Verbrauchern, wie Maschinen, Pumpen, Förderbändern etc., welchen jeweils ein sogenannter Load-Controller zugeordnet ist, der den Energieverbrauch überwacht. So wie die Energie-Verbraucher sind auch die Load-Controller räumlich verteilt, stehen jedoch über ein Netzwerk miteinander und mit einem Master-Controller in Verbindung. Dieser erfasst den Gesamtverbrauch, stellt mit Hilfe der Load-Controller fest, welche Energie-Verbraucher nicht aktiv sind und legt in Bezug auf die Energiezuteilung die Priorität der einzelnen Energie-Verbraucher fest. Der Gesamtenergieverbrauch wird in Echtzeit mit einem maximal möglichen oder optimalen Verbrauch verglichen und bei Überschreitung dieses Wertes werden in Abhängigkeit der Prioritätsvorgaben Load-Controller angewiesen, die ihnen zugeordneten Energie-Verbraucher abzuschalten oder deren Energieverbrauch zu drosseln. Bei Unterschreitung des maximalen bzw. optimalen Verbrauchs werden Energie-Verbraucher entsprechend zugeschaltet. Die Funktionalität des Master-Controllers kann jedoch auch von einer Mehrzahl an Load-Controllern übernommen werden, welche zusammenarbeiten und durch intelligente Software-Agenten gesteuert werden können. Das System gemäß US 7,373,222 B1 bezieht seine Energie lediglich von einer Quelle, dem öffentlichen Stromnetz. Dabei wird versucht die Überschreitung eines vorgegebenen Energieverbrauchs zu vermeiden, wobei eine Anpassung des Energieverbrauchs im System an den vorgegebenen Maximalwert allein über die Steuerung der Energie-Verbraucher erfolgt, was situationsabhängig gezwungenermaßen zur Abschaltung bestimmter Energie-Verbraucher führt. Die Möglichkeiten in Bezug auf die Nutzung von alternativen Energie-Quellen, inklusive Energie-Speichern, werden nicht erkannt.

Die US-amerikanische Patentschrift mit der Bezeichnung US 7,274,975 B2 beschreibt ebenfalls Systeme und Verfahren zur Optimierung des Energieverbrauchs, verfolgt darüber hinaus jedoch auch das Ziel, diese mit einer optimierten Energieversorgung zu verbinden. Die Steuerung des Systems erfolgt durch einen sogenannten Controller (Computer und Software) mit der Zielvorgabe, die Energiekosten zu minimieren. Dazu werden erst die Grenzkosten für die verschiedenen ortsfesten Energie-Quellen (Solarzellen, Brennstoffzellen, Energie-Speichern oder dem öffentlichen Stromnetz etc.) bestimmt. Danach werden die Kapazitäten der einzelnen Energie-Quellen - mit Ausnahme des öffentlichen Stromnetzes - sowie der Energiebedarf im System ermittelt. Anschließend erfolgt eine dynamische Energieallokation in Abhängigkeit der Grenzkosten und Kapazitäten der einzelnen Energie-Quellen um den festgelegten Verbrauch mit minimalen Kosten zu decken. Darüber hinaus wird auch die Möglichkeit ins Auge gefasst, den Betrieb von bestimmten Energie-Verbrauchern in jene Zeitintervalle zu legen, in welchen die Energiekosten gering sind. Es werden also sowohl Energie-Verbrauch wie auch Energie-Versorgung gesteuert. Beim System gemäß US 7,274,975 B2 handelt es sich wiederum um ein bezüglich seiner Komponenten fixiertes System, welches darüber hinaus nicht dezentral sondern zentral organisiert ist, was die Skalierbarkeit beeinträchtigt. Ein dynamisches und verteiltes System ist also nicht vorgesehen.

Darüber hinaus ist im Zusammenhang mit Elektrofahrzeugen bekannt, dass mit einer Client-Server-Architektur z.B. Besitzer von PHEVs ("plug-in hybrid electric vehicle") Parameter definieren können, die dann als Vorgabe für das Aufladen der Autobatterie gesetzt werden (V2Green Inc., Seattle, USA - "Smart Charging" und Vehicle-to-Grid-Services). Der Ladevorgang eines an das Stromnetz angeschlossenen Fahrzeuges wird dabei zentral vom Netzbetreiber koordiniert, sodass dieser die Gesamtlast des Stromnetzes über die Zeit besser verteilen kann. Das Produkt der V2Green sieht auch Dienste für den Lade- und Entladevorgang vor, sodass Fahrzeuge nicht nur als "Energiepuffer" sondern auch als Energiequelle für das Netz verwendet werden können. Die Steuerung der Vorgänge kann jedoch nicht dezentral bzw. an Ort und Stelle vorgenommen werden sondern schließt stets den Netzbetreiber, wie z.B. in einem Feldversuch die Seattle City Light, mit ein. Es wird also auch hier das althergebrachte Konzept eines Systems regionalen oder überregionalen Ausmaßes mit einem Netzbetreiber verwirklicht, was das Potential in Bezug auf eine Glättung der Lastkurve - d.h. die optimale Verteilung der Gesamtlast - bedeutend einschränkt.

Die Aufgabe der vorliegenden Erfindung besteht darin, ein Verfahren zur Verfügung zu stellen, welche ein verteiltes, flexibles Energiemanagement ermöglicht. Die Zielsetzung besteht in einer Optimierung der Energienutzung und insbesondere in einer Glättung der Lastkurve beim Energieverbrauch in einem lokalen System. Weitere Aufgaben und Vorteile ergeben sich aus den nachfolgenden Ausführungen.

Die Aufgabe wird erfindungsgemäß durch ein computergestütztes Verfahren nach Anspruch 1 zur Optimierung der Energienutzung in einem System gelöst.

Ein solches vorzugsweise lokales System beinhaltet im Wesentlichen die folgenden Komponenten:
- ein oder mehrere Energie-Controller, wobei die Energie-Controller Mittel zur Regelung und/oder Schaltung von Stromkreisen aufweisen,
- ein oder mehrere Energie-Verbraucher V₁-V_{B} (B ∈ IN; B ≥ 1; wobei "∈" bedeutet: "ist Element von" und wobei "IN" bedeutet: "natürliche Zahlen"),
- gegebenenfalls eine oder mehrere Messeinrichtungen zur Messung des Energieverbrauchs der Energie-Verbraucher,
- eine oder mehrere mobile Energie-Quellen Q₁-Q_{K} (K ∈ IN; K ≥ 1),
- gegebenenfalls Messeinrichtungen zur Messung der in den mobilen Energie-Quellen Q₁-Q_{K} gespeicherten Energiemengen E₁-E_{K} (K ∈ IN; K ≥ 1),
- gegebenenfalls eine oder mehrere stationäre Energie-Quellen wie z.B. Photovoltaik-Anlagen, Windkraftanlagen, Blockheizkraftwerke etc. und/oder eine oder mehrere stationäre Energie-Speicher,
- eine oder mehrere ortsfeste Andock-Stationen für den Anschluss der mobilen Energie-Quellen an ein systeminternes Energie-Netz,
- eine oder mehrere Energieübertragungseinrichtungen, welche zusammen ein systeminternes Energie-Netz bilden, wobei zumindest die Energie-Verbraucher, die Stationen und die Energie-Controller über das systeminterne Energie-Netz miteinander in Verbindung stehen und wobei es sich beim systeminternen Energie-Netz vorzugsweise um ein systeminternes Stromnetz handelt.
Außerdem ist das System vorzugsweise mittels einer Energie-Übertragungseinrichtung mit einem externen Energie-Netz verbunden, bei welchem es sich bevorzugt um die öffentliche Stromversorgung handelt. Die Komponenten des Systems sind vorzugsweise innerhalb und/oder neben und/oder auf einem Gebäude, einem Gebäudekomplex oder einer Gruppe von Gebäuden angeordnet, wobei es sich beim Gebäude, dem Gebäudekomplex oder der Gruppe von Gebäuden vorzugsweise um Wohngebäude und/oder Bürogebäude und/oder Produktionsstätten handelt.

Vorzugsweise zeichnet sich das erfindungsgemäße computergestützte Verfahren dadurch aus, dass es zumindest die folgenden Schritte aufweist:
a) Bereitstellen von mindestens drei Agenten, wobei
   - mindestens ein Agent (Smart Energy Agent, SEA) auf einem Computer ausgeführt wird, der einem systeminternen Energie-Netz zugeordnet ist, an welches die Energie-Verbraucher angeschlossen sind,
   - mindestens ein Agent (Car Agent, CA) auf einem Computer ausgeführt wird, der einer mobilen Energie-Quelle zugeordnet ist,
   - mindestens ein Agent (Station Agent, SA) auf einem Computer ausgeführt wird, der einer oder mehreren ortsfesten Andock-Stationen für mobile Energie-Quellen zugeordnet ist, wobei die Andock-Stationen an das systeminterne Energie-Netz angeschlossen sind,
b) Erstellung eines Plans für eine optimierte Energienutzung im System auf der Grundlage von mindestens den folgenden Informationen:
   - Energiemengen E₁-E_{K} (K ∈ IN; K ≥ 1), welche in einer Anzahl an mobilen Energie-Quellen Q₁-Q_{K} (K ∈ IN; K ≥ 1) gespeichert sind,
   - Energienutzung und/oder Energieverbrauch im System zu den Zeitpunkten T₁-T_{c} (C ∈ IN; C ≥ 1) oder einer Teilmenge davon,
   wobei die Erstellung des Plans durch einen Agenten erfolgt, wobei es sich beim Agenten vorzugsweise um den SEA handelt,
c) Regelung des Energieflusses mindestens zwischen
   - mobilen Energie-Quellen, welche an Andock-Stationen des Systems angedockt sind und
   - den Energie-Verbrauchern des Systems,
   auf der Grundlage des erstellten Plans, wobei die Regelung direkt oder indirekt durch einen Agenten erfolgt, wobei es sich beim Agenten vorzugsweise um den SEA handelt.

Die Entscheidungsprozesse, die zur effizienten Nutzung von Energie in einem System wie beispielsweise einem Haushalt (beispielsweise beinhaltend mehrere Verbraucher, ein Energie-Netz, eine Andock-Station) notwendig sind, werden also bevorzugt durch ein verteiltes Multiagentensystem realisiert. Ziel des Systems ist es unter anderem, die Lastkurven beim Energieverbrauch optimal zu glätten und/oder die Energiekosten zu minimieren, was unter anderem durch dynamisches Hinzufügen und Schalten mobiler Energie-Quellen geschieht.

Ein oben genanntes computergestütztes Verfahren zeichnet sich bevorzugt dadurch aus, dass die Erstellung des Plans für eine optimierte Energie-Nutzung im System mindestens auf der Grundlage der folgenden Informationen erfolgt: - dem voraussichtlichen Gesamtenergieverbrauch Z zu den (zukünftigen) Zeitpunkten T_{G}-T_{H} (G,H ∈ IN; E≤G≤H), wobei der Energieverbrauch eines oder mehrerer der Energie-Verbraucher zu den Zeitpunkten T₁-T_{c} (C ∈ IN; C ≥ 1) oder einer Teilmenge davon gemessen wird, wobei ein Agent aus dem Energieverbrauch zu den Zeitpunkten T₁-T_{c} (C ∈ IN; C ≥ 1) oder einer Teilmenge davon den Gesamtenergieverbrauch G zu den Zeitpunkten T_{D}-T_{E} (D,E ∈ IN; 1≤D≤E≤C) berechnet und anschließend, auf der Grundlage von zumindest dem Gesamtenergieverbrauch G zu den Zeitpunkten T_{D}-T_{E} oder einer Teilmengen davon, eine Berechnung des voraussichtlichen Gesamtenergieverbrauchs Z zu den (zukünftigen) Zeitpunkten T_{G}-T_{H} (G,H ∈ IN; C≤G≤H) durchgeführt wird, und - eine von einem Benutzer des Systems festgelegte geplante Nutzung von Energie-Verbrauchern zu den Zeitpunkten T_{G}-T_{H} oder einer Teilmenge davon, welche vom Benutzer mittels einer Benutzerschnittstelle an einen Agenten übergegeben wird, und/oder
- der von Messeinrichtungen gemessenen Energiemenge, welche an eine oder mehreren Energie-Quellen zu den Zeitpunkten T₁-T_{c} oder einer Teilmenge davon zugeführt oder von diesen bezogen wurde, und/oder
- eine von einem Benutzer festgelegte, geplante Ladung und/oder Entladung von Energie-Quellen zu der Zeitpunkte T_{G}-T_{H} oder einer Teilmenge davon, welche vom Benutzer mittels einer Benutzerschnittstelle an einen Agenten übergegeben wird und/oder
- der Verfügbarkeit von Strom aus einem externen Stromnetz zu den Zeitpunkten T_{G}-T_{H} oder einer Teilmenge davon, wobei das externe Stromnetz mittels einer Energie-Übertragungseinrichtung mit dem systeminternen Energie-Netz verbunden ist und wobei es sich beim externen Stromnetz vorzugsweise um die öffentliche Stromversorgung handelt, und/oder
- der Verfügbarkeit (auch durch Zukauf) und der Menge an vorhandenen Brennstoffen zum Betrieb stationärer Energie-Quellen, und/oder
- dem Ergebnis einer Berechnung, welche von einem Agenten durchgeführt wird, um zu ermitteln, wie viel des voraussichtlichen Gesamtenergieverbrauchs Z zu den Zeitpunkten T_{G}-T_{H} und/oder des gegenwärtigen Gesamtenergieverbrauchs durch E₁-E_{K} gedeckt werden kann (abhängig z.B. von der Kapazität der mobilen Energie-Quelle, der Verfügbarkeit der mobilen Energie-Quelle an einer Station des Systems, der in der mobilen Energie-Quelle gespeicherten Energiemenge etc.), und/oder
- dem voraussichtliche Strompreis zu den Zeitpunkten T_{G}-T_{H} oder einer Teilmenge davon, wobei der Strompreis auf der Grundlage der normalen Tarife und/oder spezieller Klimatarife und/oder aus dem Handel von Spot- oder Terminprodukten an Strombörsen vorausgesagt wird, und/oder
- den voraussichtlichen Brennstoffpreisen zu den Zeitpunkten T_{G}-T_{H} oder einer Teilmenge davon und den Wirkungsgraden der stationären Energie-Quellen, die mit den Brennstoffen betrieben werden, wobei die Brennstoffpreise vorzugsweise auf der Grundlage der gegenwärtigen Brennstoffpreise vorausgesagt werden, und/oder
- den zu den Zeitpunkten T₁-T_{c} oder einer Teilmenge davon gemessenen Umweltbedingungen und den Wirkungsgraden der stationären Energie-Quellen, die diese Umweltbedingungen zur Energieproduktion nutzen, wobei es sich bei den Umweltbedingungen vorzugsweise um die Windstärke und/oder Temperatur und/oder Sonneneinstrahlung und/oder Tageslänge handelt, und/oder
- den voraussichtlichen Umweltbedingungen zu den Zeitpunkten T_{G}-T_{H} und den Wirkungsgraden der stationären Energie-Quellen, die diese Umweltbedingungen zur Energieproduktion nutzen, wobei es sich bei den Umweltbedingungen vorzugsweise um die Windstärke und/oder Temperatur und/oder Sonneneinstrahlung und/oder Tageslänge und/oder Jahreszeit und/oder Niederschlagsmenge handelt, und/oder
- dem Ergebnis einer Berechung, welche durch einen Agenten durchgeführt wird, um zu ermitteln, wie viel des voraussichtlichen Gesamtenergieverbrauchs Z zu den Zeitpunkten T_{G}-T_{H} und/oder des gegenwärtigen Gesamtenergieverbrauchs durch eine oder mehrere an das systeminterne Energie-Netz angeschlossene stationäre Energie-Quellen gedeckt werden kann und/oder wie viel durch E₁-E_{K} gedeckt werden kann und/oder wie viel Energie an Q₁-Q_{K} abgegeben werden kann, so dass: der Wert für den Gesamtenergieverbrauch Z zuzüglich der an Q₁-Q_{K} abgegebenen Energie und abzüglich des durch E₁-E_{K} gedeckten Anteils und abzüglich des durch die stationären Energie-Quellen gedeckten Anteils über die Zeitpunkte T_{G}-T_{H} geringere Schwankungen als der voraussichtliche Gesamtenergieverbrauch Z aufweist und/oder so dass: die Schwankungen der aus dem externen Stromnetz bezogenen Strom-Menge über die Zeitpunkte T_{G}-T_{H} minimal sind und/oder so dass: die Kosten für die Deckung des Gesamtenergieverbrauchs minimal sind.

Die Agenten bzw. die ihnen zugeordneten Computer befinden sich vorzugsweise räumlich getrennt in drei Hauptdomänen: Heimbereich, Station (d.h. Andock-Station) und mobile Energie-Quelle. Beim Heimbereich handelt es sich um die Summe aller Systemkomponenten außer den Stationen und den mobilen Energie-Quellen. Vorzugsweise sind eine oder mehrere der mobilen Energie-Quellen Energie-Speicher, insbesondere Batterien, wobei eine oder mehrere der mobilen Energie-Quellen vorzugsweise Teile von Fahrzeugen sind, insbesondere von Elektrofahrzeugen und/oder Hybridfahrzeugen. In diesem Dokument soll unter den Begriffen "Fahrzeug", "Auto", "Elektroauto", "Elektrofahrzeug" oder "Batterie" neben der Bedeutung der jeweiligen Worte zusätzlich oder alternativ (und/oder) auch eine beliebige mobile Energie-Quelle verstanden werden. Entsprechend ist unter "laden" und "entladen" auch allgemein das Zuführen von Energie zur mobilen Energie-Quelle und die Abgabe von Energie aus der mobilen Energie-Quelle zu verstehen. Der Begriff "Batteriestand" bezeichnet entsprechend die in der/den mobilen Energie-Quelle(n) vorhandene(n) Energiemenge(n).

Durch das verteilte Multiagentensystem werden insbesondere folgende technischen Neuerungen umgesetzt:
- Durch den CA können die mobilen Energie-Quellen selbständig Anschlussmöglichkeiten bzw. Andock-Stationen ausfindig machen, sich bei diesen - bzw. den SA - anmelden und authentifizieren. Dabei werden über Interaktionsprotokolle die aktuellen Daten zur mobilen Energie-Quelle zwischen den Agenten ausgetauscht. Das ermöglicht ein automatisches und autonomes Erkennen der aktuellen mobilen Energie-Quelle, beispielsweise einer Fahrzeug-Batterie, und deren Zustände. Durch diese technische Umsetzung werden das Fahrzeug und die Batterie austauschbar und die Konfiguration kann dynamisch verändert werden. Auch ist es möglich, mehrere Fahrzeuge bei einer Andock-Station anzumelden. Die CA können den Lade- und Entladevorgang ohne zentrale Steuerinstanz koordinieren und auch in fremden Umgebungen Anschlussmöglichkeiten bzw. Andock-Stationen ausfindig machen und sich auf Basis von Protokollen mit den SA koordinieren.
- Vorgesehen ist auch die automatische Kapazitätsermittlung der Batterie während das Fahrzeug bei der Station angemeldet ist. Außerdem wird ein aktueller Verwendungsplan für die Batterieladung erstellt, übermittelt und mit eventuell vorhandenen Plänen des Heimbereichs abgeglichen. Der Verwendungsplan beruht im Wesentlichen auf dem aktuellen Zustand der Batterie und den aktuellen Plänen des Nutzers.
- Ermöglicht wird ein automatischer Ausgleich der Lastspitzen durch Hinzuschalten der Batterie zum Netzwerk des Heimbereichs des Nutzers, um die durch das System ermittelten Verbraucher (d.h. Energie-Verbraucher) zu speisen. Der Vorgang der Entladung (Zeitpunkt, Dauer, Menge) wird technisch durch Kommunikation über Interaktionsprotokolle zwischen den Agenten gesteuert. Über diese Protokolle werden Ontologien ausgetauscht, die die notwendigen aktuellen Daten für die Batterie-Entladung beinhalten. Außerdem wird dadurch die Schaltung des Energie-Netzes auf der Seite der Batterie und auf der Seite des Heimbereichs synchronisiert. Die Agenten nutzen dabei auf beiden Seiten ein Software-Interface, um eine Schaltung auslösen zu können.
- Eine weiterer Aspekt ist das Erkennen der persönlichen Pläne des Nutzers (des Heimbereichts und/oder der mobilen Energie-Quelle), dessen "EnergieNutzungs-Gewohnheiten" und Bestimmung einer Prognose für die zukünftige Nutzung.
- Das Aufladen der Batterie zu einem Zeitpunkt geringer Energiekosten, realisiert durch dynamische Interaktion von intelligenten Agenten

Die Agenten übernehmen Teilaufgaben bei der Optimierung der Energienutzung im System und sie sind durch ihre kommunikativen Fähigkeiten in der Lage, mit den anderen Agenten des Systems zusammenzuarbeiten und somit den Energiehaushalt, d.h. die Energie-Nutzung, autonom zu regulieren. Im Folgenden werden die Agenten des Systems mit ihren Aufgaben und Fähigkeiten identifiziert und deren Kommunikation beschrieben. Es handelt sich hierbei jedoch lediglich um bevorzugte Ausgestaltungsformen. Dem Fachmann ist klar, dass in Bezug auf die Agenten auch von der nachfolgenden Beschreibung abweichende Aufgaben bzw. Aufgabenkombinationen sowie Fähigkeiten bzw. Fähigkeitskombinationen und damit auch eine veränderte Kommunikation zwischen den Agenten möglich ist.

Der Austausch von Informationen zwischen den Agenten findet bevorzugt in Form von Ontologien statt. Die Datenstrukturen beschreiben die relevanten Sachverhalte und Aspekte des Systems und ermöglichen somit die Kommunikation der Komponenten im Hinblick auf die Problemlösung. Die wesentlichen Eigenschaften der Systemkomponenten können durch diese Datenstrukturen ständig überwacht und überprüft werden, welches das zielgerichtete Handeln und Entscheiden des Systems ermöglicht. Nachfolgend werden Beispiele für nützliche Ontologien aufgeführt, die der Illustration dienen sollen. Dem Fachmann ist jedoch klar, dass die Erfindung auch mit Hilfe von Datenstrukturen anderen Inhalts oder anderer Art umgesetzt werden kann.

Die "Vehicle-Ontologie" beschreibt mit ihren Datenstrukturen wesentliche Merkmale eines Fahrzeugs bzw. einer mobilen Energie-Quelle. Dies beinhaltet die Beschreibung des Fahrzeughalters, Nutzers und der Batterie (vgl. Tabelle 1).

**Tabelle 1: Vehicle-Description**

| **Attributname** | **Typ** | **Beschreibung** |
|---|---|---|
| Owner | Person | Beschreibung des Eigentümers des Fahrzeuges |
| Identifikation | Long | Eindeutige ID für die Fahrzeugbeschreibung |
| User-Description | EnergyUser | Beschreibung des Fahrzeug-Nutzers |
| Batteries | List of VehicleBattery | Beschreibung der Batterien |

Die "Battery-Ontologie" beschreibt wesentliche Informationen, die zur Überwachung der Batterie (Ladezustand, Herstellerinformationen etc) notwendig sind (vgl. Tabellen 2, 2.1, 2.1.1, 2.1.2 und 2.1.3).

**Tabelle 2: Vehicle-Battery**

| **Attributname** | **Typ** | **Beschreibung** |
|---|---|---|
| Batteryldentification | String | Eindeutige ID für die Batterie |
| BatteryDescription | BatteryDescription | Beschreibung der Batterie |

**Tabelle 2.1: Battery-Description**

| **Attributname** | **Typ** | **Beschreibung** |
|---|---|---|
| StaticBatteryInfo | StaticBatteryInfo | Beschreibt Attribute der Batterie |
| CurrentBatteryState | CurrentBatteryState | Beschreibt die aktuellen Werte der Batterie |
| CriticalBatteryState | CriticalBatteryStates | Beschreibt kritische Werte der Batterie die einen Alarm auslösen |

**Tabelle 2.1.1: StaticBatteryInfo**

| **Attributname** | **Typ** | **Beschreibung** |
|---|---|---|
| InitialCapacity | Int | Ursprüngliche Kapazität der Batterie |
| InitialCapacityHigh | Int | Letzte volle Kapazität der Batterie |
| InitialVoltage | Int | Spannung der Batterie |
| InitialCapacityWarning | Int | Ursprüngliche untere Grenze für Kapazität |
| InitialCapacityLow | Int | Ursprüngliche niedrige Kapazität |
| ModelNumber | String | Modellnummer |
| SerialNumber: | Int | Seriennummer |
| BatteryType | | Batterietyp |
| OEM info | | Information des Herstellers |

**Tabelle 2.1.2: CurrentBatteryState**

| **Attributname** | **Typ** | **Beschreibung** |
|---|---|---|
| Availability | String | Batterie ist vorhanden oder nicht |
| CurrentCapacity | String | Zustand ist entweder in Ordnung oder Alarm |
| CurrentChargingState | String | Laden oder Entladen |
| CurrentRate | Int | |
| CurrentRemainingCapacity | Int | Verbleibende Kapazitaet der Batterie |
| CurrentVoltage | Int | Aktuelle Spannung |

**Tabelle 2.1.3: CriticalBatteryState**

| **Attributname** | **Typ** | **Beschreibung** |
|---|---|---|
| BatteryRechargeAlarm | Int | Kapazität die den Alarm für das Laden anstößt |
| CarComputerMinimumCapacity | Int | Schwellenwert der Kapazität die notwendig ist um den Autocomputer zu betreiben |
| EmergencyDriveCapacity | Int | Schwellenwert der Kapazität die notwendig ist um Notfall-Fahrten voruzunehmen |

Die "User-Ontologie" beschreibt wesentliche Informationen betreffend den Nutzer der mobilen Energie-Quelle. Es handelt sich dabei um das Profil des Nutzers der mobilen Energie-Quelle, welches insbesondere auch Informationen zu den Plänen des Nutzers in Bezug auf die Verwendung der mobilen Energie-Quelle enthält (vgl. Tabelle 3).

**Tabelle 3: UserDescription**

| **Attributname** | **Typ** | **Beschreibung** |
|---|---|---|
| Name | String | Name des Fahrzeug-Nutzers |
| NextCarUsage | Date | Daten, wann das Fahrzeug wieder genutz wird |
| WeeklySchedule | WeeklyPlan | Plan der Fahrzeugnutzung des Benutzers entsprechend Daten aus der Vergangenheit und Präferenzen |

Die "Session-Ontologie" beschreibt notwendige Informationen die zur Sessionsverwaltung und Abrechnung benötigt werden. Hauptsächlich werden die dort beschriebenen Daten vom SA erhoben. Die Datenstrukturen sind so modelliert, dass ihre Instanzen ohne weiteres in Datenbanken abgelegt werden können (vgl. Tabelle 4 und 4.1).

**Tabelle 4: Session**

| **Attributname** | **Typ** | **Beschreibung** |
|---|---|---|
| Sessionld | String | Eindeutige Identifikation |
| StartTime | Date | Datum/Zeit des Session-Beginn |
| EndTime | Date | Datum/Zeit des Session-Ende |
| VehicleIdentification | long | Eindeutige identifikation des Fahrzeuges, das die Session initiiert hat |
| PowerExchanges | List of String | Liste von Transaktions-Idintifikationen die während der Session stattgefunden haben |

**Tabelle 4.1: PowerExchange**

| **Attributname** | **Typ** | **Beschreibung** |
|---|---|---|
| Exchangeldentification | String | Eindeutige Identifikation der Trasaktion |
| StartTime | Date | Datum/Zeit des Session-Beginn |
| EndTime | Date | Datum/Zeit des Session-Ende |
| ExchangeCapacity | int | Identifikation des Transaktionsvolumens |
| BatteryIdentification | String | Identifikation der Batterie die an der Transaktion beteiligt ist |

Die **"HomeEnergy-Ontologie"** beschreibt notwendige Informationen die den Heimbereich des Systems betreffen (vgl. Tabelle 5).

**Tabelle 5: EnergyUser-Description**

| **Attributname** | **Typ** | **Beschreibung** |
|---|---|---|
| Name | String | Name des Benutzers der Heimumgebung |
| CarUsagePrognostics | CarUsagePrognosisVector | Aktuelle Prognose des Fahrzeuggebrauchs basierend auf Daten aus der Vergangenheit und Präferenzen |
| EnergyConsumptionPrognostics | EnergyPrognosisVector | Aktuelle Prognose des Energieverbrauchs basierend auf Daten aus der Vergangenheit und Präferenzen |

Die Agenten des Systems übernehmen die wichtigsten Entscheidungsprozesse des verteilten Energiemanagement-Systems. Dabei besteht ihre Hauptaufgabe darin, Situationen zu überwachen, das Verhalten des Systems oder des Nutzers zu antizipieren und Optimierungen im Systemablauf durchzuführen. Ebenfalls müssen Fehler erkannt und entsprechend kommuniziert und korrigiert werden.

Der CA befindet sich auf einem Rechner im Fahrzeug des Fahrzeugbesitzers. Dort überwacht er den Ladestand der Batterie (oder der Batterien) und besitzt auch zusätzliche Information über die Tätigkeiten und Pläne des Fahrzeug-Nutzers. Bei eventuell alarmierenden Zuständen der Batterie (Ladezustand, Entladung) versucht er Gegenmaßahmen einzuleiten. Er kommuniziert mit dem SA und versucht diesem immer ein aktuelles Bild des Ladezustands der Batterie zu übermitteln, damit dieser die Entladung der Batterie oder das Laden der Batterie entsprechend optimal vornehmen kann. Der CA ist also verantwortlich für den Batteriestand und die Kommunikation desselben und er überwacht weitere Daten, die in den Nutzer-Profilen vorhanden sind. Beispielsweise, werden die Fahrerprofile (Profile der Nutzer der mobilen Energie-Quellen) mit den Routen und den Batteriekapazitäts-Bedürfnissen regelmäßig auf den neuesten Stand gebracht. Ferner werden die Lade- und Entlade-Beschränkungen der Batterie immer auf dem neuesten Stand gehalten und regelmäßig an den SA und/oder den SEA kommuniziert. Der CA ist in der Lage die Ladung und Entladung der mobilen Energie-Quelle aber auch die damit im Zusammenhang stehenden Aktivitäten aufzuzeichnen. Handelt es sich bei der mobilen Energie-Quelle z.B. um ein Fahrzeug, so kann der CA gefahrene Strecken aufnehmen und mit dem Verbrauch an Energie in Relation setzen um die Dauer der Fahrten, den damit verbunden Energieverbrauch und die Energiekosten für die Zukunft vorhersagen zu können. Der CA verfügt darüber hinaus über eine Schnittstelle für den Nutzer/Fahrer, über die dessen Interessen aufgenommen und dessen Informationsbedarf gedeckt werden kann. Die Lade-und Entlade-Zeiträume werden ebenfalls vom CA vorgegeben und er sorgt für eine sichere Kommunikation mit dem SA. Relevante Informationen werden bevorzugt in Form von Ontologien verwaltet, wobei der CA insbesondere mit den folgenden Ontologien arbeitet: Battery, Vehicle und User.

Ein computergestütztes Verfahren wie es oben erwähnt wurde, ist also dann besonders vorteilhaft, wenn der CA mindestens folgende Funktionen übernimmt und/oder ausführen kann:
- Bereitstellung einer Schnittstelle, über welche der Nutzer der mobilen Energie-Quelle Informationen abfragen und/oder Informationen eingeben kann, wobei zu diesen Informationen vorzugsweise Pläne für die Nutzung der mobilen Energie-Quelle und/oder Angaben zur zulässigen minimalen Energiemenge in der mobilen Energie-Quelle gehören, und/oder
- Verwaltung und Aktualisierung von Informationen betreffend den Nutzer der mobilen Energie-Quelle (EQ-Profil), wobei dazu insbesondere auch die geplante Nutzung der mobilen Energie-Quelle gehört und wobei im Falle, dass es sich bei der mobilen Energie-Quelle um ein Fahrzeug handelt, die geplante Nutzung vorzugsweise geplante Fahrten sind, und/oder
- Aufzeichnung der gefahrenen Strecken, der dazu benötigten Zeit sowie des damit verbundenen Energieverbrauchs und Vorhersage der Dauer von geplanten Fahrten und des damit verbundenen Energieverbrauchs, wenn es sich bei der mobilen Energie-Quelle um ein Fahrzeug handelt, und/oder
- Überwachung des Zustandes der mobilen Energie-Quelle und/oder der in der mobilen Energie-Quelle gespeicherten Energiemenge und Kommunikation des Zustandes und/oder der Energiemenge an den SA, und/oder
- Einleitung von Gegenmaßnahmen bei kritischem Zustand der mobilen Energie-Quelle und/oder bei Unterschreitung einer bestimmten Energiemenge in der mobilen Energie-Quelle, und/oder
- Regelung des Energieflusses von und zu der mobilen Energie-Quelle, und/oder
- Aufbau und/oder Aufrechterhaltung einer sicheren Kommunikationsverbindung zum SA, und/oder
- Austausch von Authentifizierungsdaten mit dem SA und/oder Übermittlung von Authentifizierungsdaten an den SA.

Der SA überwacht die Abläufe auf der Station. Er erkennt, wenn sich ein Fahrzeug der Station nähert und handelt in einem Handshake-Vorgang einen eventuellen Andockvorgang aus. Der Andockvorgang wird vorzugsweise nur bei Fahrzeugen ermöglicht, die in der Handshake/Aushandlungsphase die geeigneten Authentifizierungsdaten übergeben. Der SA ist also unter anderem verantwortlich für das Andocken von mobilen Energie-Quellen sowie die Authentifizierung von mobiler Energie-Quellen und/oder deren CA und er dient als Einstiegspunkt für die Kommunikation des CA oder des Nutzers der mobilen Energie-Quelle mit dem Heimbereich, d.h. der SA stellt eine Kommunikationsbrücke zwischen CA und SEA dar. Des Weiteren protokolliert er die Ladung- und Entladung der Batterie und kann Anfragen über die verfügbare Kapazität beantworten. Er ist in der Lage, Auskunft über Lade- und Entlade-Protokolle sowie den eigenen Zustand und Login-Protokolle zu geben. Aus Sicherheitsgründen ist der Andock-Vorgang mit einem Handshake-Prozess zwischen SA und CA verbunden. Der SA arbeitet insbesondere mit den folgenden Ontologien: Battery, Vehicle, User und Session.

Ein oben erwähntes computergestütztes Verfahren ist also dann besonders vorteilhaft, wenn der SA mindestens folgende Funktionen übernimmt und/oder ausführen kann:
- Ermittlung, ob sich eine mobile Energie-Quelle der Station nähert und/oder eine mobile Energie-Quelle in der Nähe der Station vorhanden ist, wobei es bevorzugt ist dass durch ein Broadcast-Signal ermittelt wird, ob sich eine mobile Energie-Quelle der Station nähert und/oder eine mobile Energie-Quelle in der Nähe der Station vorhanden ist und/oder
- Aufbau und/oder Aufrechterhaltung einer sicheren Kommunikationsverbindung zum CA und/oder zum SEA, und/oder
- Austausch von Authentifizierungsdaten mit dem CA, und/oder
- Durchführung eines Handshake-Vorgangs mit dem CA, wobei nach Übermittlung der korrekten Authentifizierungsdaten vom CA an den SA die mobile Energie-Quelle mittels einer Energieübertragungseinrichtung an das systeminterne Energie-Netz angeschlossen wird, und/oder
- Funktion als Kommunikationsbrücke zwischen SEA und CA, insbesondere für die Kommunikation des Zustandes der mobilen Energie-Quelle und/oder der in der mobilen Energie-Quelle gespeicherten Energiemenge an den SEA, und/oder
- Aufzeichnung des Energieflusses vom internen Energie-Netz zur mobilen Energie-Quelle und umgekehrt, sowie Kommunikation der Aufzeichnungen an den SEA.

Der SEA befindet sich im Heimbereich des Nutzers. Bei ihm laufen alle relevanten Datenströme zusammen, die den Nutzer betreffen. Über dessen Schnittstelle kann der Nutzer sämtliche Informationen die das Energiemanagement betreffen (gegenwärtigen Einstellungen, System-Zustand), einsehen und er kann im vorhandenen Nutzerprofil und insbesondere den Nutzerpräferenzen etwaige Veränderungen vornehmen. Unter Berücksichtigung der Veränderungen erstellt der SEA neue Regeln und programmiert damit den Smart Energy Controller (SEC), d.h. die Steuerung der Vorrichtung (Energie-Controller), die den Energiefluss im internen Energie-Netz regelt. Der SEA verwaltet also die Voreinstellungen und Pläne des Nutzers und programmiert den SEC mit den vom Benutzer eingegebenen Regeln. Er bietet Zugriff auf den Energie-Controller, führt Zustandsabfragen zur aktuellen Schaltung des Energie-Controllers durch und nimmt Regelmodifikation vor. Die Identifikation des Nutzers erfolgt bevorzugt über biometrische Verfahren und der SEA unterhält ein Vertrauensverhältnis bzw. unterstützt eine sichere Kommunikation mit der/den Andock-Station(en) und/oder den mobilen Energie-Quellen bzw. den entsprechenden Agenten (SA, CA). Der SEA arbeitet insbesondere mit den Ontologien: User, Battery und Vehicle.

Aus den verwendeten Ontologien ist zu ersehen, welche Interaktionen zwischen den Agenten vorzugsweise stattfinden, d.h. wer mit wem welche Daten austauscht.

Ein oben erwähntes computergestütztes Verfahren ist also vorteilhaft, wenn der SEA mindestens folgende Funktionen übernimmt und/oder ausführen kann:
- Identifikation des Nutzers des Systems über biometrische Verfahren und/oder
- Bereitstellung einer Schnittstelle, über welche der Nutzer des Systems Informationen abfragen und/oder Informationen eingeben kann, wobei zu diesen Informationen vorzugsweise Pläne des Nutzers für die Nutzung der Energie-Verbraucher gehören, und/oder
- Verwaltung und Aktualisierung von Informationen betreffend den Nutzer des Systems (Nutzer-Profil), wobei dazu insbesondere auch die geplante Nutzung von Energie-Verbrauchern gehört und/oder
- Erstellung des Plans für eine optimierte Energie-Nutzung im System und/oder Verwaltung und/oder Aktualisierung der zur Erstellung des Plans notwendigen Informationen, und/oder
- Regelung des Energieflusses durch Steuerung und/oder Programmierung des Energie-Controllers, wobei es bevorzugt ist, dass die Regelung des Energieflusses außerdem eine der folgenden Maßnahmen beinhaltet: eine gezielte Leistungsdrosselung und/oder Leistungserhöhung und/oder eine gezielte Ab- und/oder Einschaltung von einzelnen Energie-Verbrauchern oder Gruppen von Energie-Verbrauchern und/oder eine gezielte Zu- oder Abschaltung von stationären Energie-Quellen, die an das systeminterne Energie-Netz angeschlossen sind, und/oder
- Abfrage des Zustandes des Energie-Controllers, insbesondere dessen aktueller Schaltung, und/oder
- Aufbau und/oder Aufrechterhaltung einer sicheren Kommunikationsverbindung zum SA und/oder zum Energie-Controller und/oder zum CA.

Der SEC ist verantwortlich für die Schaltungen, die das Hinzufügen und Entfernen von Energie-Quellen betreffen. Durch betätigen einer Schaltung kann dem internen Energie-Netz eine bestimmte Energie-Quelle, zum Beispiel eine AutoBatterie, hinzugefügt werden. Er kontrolliert den Energieverteiler, d.h. den Energie-Controller, und steuert damit den Energieverbrauch im System. Darüber hinaus ist er für die Planung der Energieverteilung zuständig. Er ist weiterhin in der Lage, Aufzeichnen des Energieverbrauchs durchzuführen, um daraus Vorhersagen über den zukünftigen Energieverbrauch zu generieren. Dem SEC obliegt zudem die Auswertung des aktuellen Zustandes des Systems (Schaltung des Energie-Controllers, Energieverbrauch etc.) auf Grundlage der Regeln. Der SEC kann eine Änderungs-Historie der Regeländerungen erstellen und er unterhält ein Vertrauensverhältnis zum SEA. Darüber hinaus weist der SEC eine Monitorschnittstelle zum SEA auf, damit dieser die Schaltungen des Energie-Controllers abfragen kann. Außerdem besitzt der SEC eine Instruktionsschnittstelle für den SEA damit dieser den Energie-Controller umprogrammieren (lassen) kann. Beim SEC kann es sich um einen intelligenten Agenten handeln, jedoch ist dies aufgrund der moderaten Anforderungen an seine Fähigkeiten nicht unbedingt notwendig. Er arbeitet insbesondere mit der HomeEnergy-Ontologie.

Ein computergestütztes Verfahren wie es oben erwähnt wurde, ist also dann besonders vorteilhaft, wenn die Regelung des Energieflusses durch eine Vorrichtung erfolgt, welche Mittel zur Regelung und/oder Schaltung von Stromkreisen im internen Energie-Netz aufweist (Energie-Controller), wobei der Energie-Controller zusätzlich mindestens die folgenden Funktionen übernimmt:
- Aufzeichnung des Energieverbrauchs durch die Energie-Verbraucher und/oder
- Aufbau und/oder Aufrechterhaltung einer sicheren Kommunikationsverbindung zum SEA.

Die Agenten koordinieren sich selbständig. Hierbei authentifizieren sie sich gegenseitig und tauschen benötigte Daten aus. Die Authentifizierung erfolgt durch gängige Public-Key Verfahren. Im Folgenden werden bevorzugte Varianten der einzelnen Interaktionen beschrieben, wobei beispielhaft von einem Fahrzeug als mobiler Energie-Quelle und einer Wohnung als System ausgegangen wird. Von den Ausführungen soll jedoch jeweils auch allgemein eine mobile Energie-Quelle bzw. allgemein ein System umfasst sein.

Die Interaktion von CA und SA beginnt mit einer Anmeldung (Login) des CA beim SA und endet mit einer Abmeldung (Logout). Die Sitzung wird initiiert, nachdem das Fahrzeug an die Ladestation angedockt hat. Nach dem erfolgreichen Handshake (d.h. der gegenseitigen Authentifizierung) sendet der CA Daten bezüglich der Batterie (technische Merkmale, Zustand) sowie Daten, die das Fahrverhalten und den Verbrauch beschreiben. Wird die physische Verbindung zwischen Fahrzeug und Andock-Station getrennt, wird vorzugsweise auch die Kommunikationsverbindung in beidseitigem Einvernehmen aufgelöst.

Nachdem sich der CA erfolgreich angemeldet hat, leitet der SA die technischen Daten der Batterie und Daten zum Energieverbrauch (Fahrerprofil) an den SEA weiter. Letzterer benötigt diese Daten um das Entladen und das Aufladen der Batterie einzuplanen. Nimmt der Nutzer in der Wohnung Aktualisierungen an seinem Profil vor, so werden diese Änderungen auch dem SA zur Weiterleitung mitgeteilt. Letzterer kann auch via Nachfrage (vor Abkoppeln des Fahrzeugs) das aktuelle Benutzerprofil abfragen um es dem zugehörigen CA mitzuteilen.

Aufgrund des vorhergesagten Energie-Verbrauchs im System und der verfügbaren Fahrzeug-Batterien, wird der SEC vom SEA beauftragt, den Energie-Controller entsprechend umzuprogrammieren. Auch kann der SEA, meist durch Initiative des Nutzers, außerplanmäßige Änderungen veranlassen und diese dem SEC mitteilen.

Die Softwarekomponenten sollen flexibel ausgestaltet sein, d.h. es soll ein Management der Softwarekomponenten ermöglicht werden, worunter man alle Maßnahmen der Laufzeitumgebung versteht, einen reibungslosen Ablauf der erstrebten Funktionalitäten zu gewährleisten. Dazu zählen das Management des Lebenszyklus der Softwarekomponenten, das Einfügen/Entfernen von Funktionalität, Maßnahmen zur Fehlerdiagnose, die Überwachung (Monitoring) der Komponenten sowie das gegenseitige Auffinden der Komponenten durch automatische, selbstgesteuerte Mechanismen. Diese Mechanismen sind Teil der Laufzeitumgebung der Softwarekomponenten und dienen zum Teil als Infrastruktur für die spezifischen Funktionalitäten, die im Rahmen der Energieübertragung in diesem Dokument spezifiziert sind.

Da beim Betrieb des Systems persönliche Daten über Auto, Wohnung, Energieverbrauch oder andere persönliche Details, wie Termine oder änliches übertragen und kommuniziert werden, müssen geeignete Sicherheitsmaßnahmen auf Softwareebene getroffen werden, die einen möglichen Missbrauch dieser Daten verhindern. Über die Andock-Station werden Daten in Bezug auf den Energietransfer ausgetauscht und außerdem bietet sie den Zugang zum Heimbereich des Nutzers. Deshalb sind Maßnahmen erforderlich, die den Nutzer entsprechend authentifizieren und dessen Autorisierung überprüfen. Eine weitere Authentifizierung/Autorisierung muss zwischen der Andock-Station und dem Heimbereich stattfinden. Für die Auktion auf einer Plattform muss sichergestellt werden, dass die Authentizität des Vertretungsanspruchs des Käufers/Verkäufers gegeben ist. Damit bei der Kommunikation der einzelnen Teile des Systems keine Informationen von Dritten abgefangen werden können, muss sichergestellt werden, dass die Kommunikation nur zwischen den beabsichtigten Teilnehmern stattfindet. Dazu wird die Kommunikation entsprechend verschlüsselt. Außerdem werden die Daten (User Ontologie etc.) von den einzelnen Teilen des Systems so aufbewahrt, dass der Zugriff nur für Befugte erfolgen kann.

Die Interaktion der Agenten wird durch Interaktions-Protokolle geregelt. Bevorzugte Ausgestaltungen solcher Protokolle werden im Folgenden beschrieben.

Das Finden der Agenten, beispielsweise das Auffinden eines CA durch einen SA, geschieht bevorzugt im Umfeld einer ad-hoc Netzwerkverbindung. Deswegen ist die einfachste und schnellste Möglichkeit der Auffindung eines Agenten der Broadcast, der es allen Agenten ermöglicht, die diesen empfangen, auf diese Broadcast-Anfrage zu antworten. Der Initiator stellt eine Anfrage über einen Broadcast, auf den ein Peer, der diese Anfrage erhält, antworten kann. Sobald der Initiator eine Antwort erhält, kann dieser beginnen, eine Session zu etablieren. Dabei kann die Session auf zwei unterschiedliche Weisen etabliert werden. Das Erstellen einer Session dient dazu, die Verbindung der Agenten untereinander aufrechtzuerhalten und herauszufinden, ob es Probleme bei der Kommunikation gibt. Es gibt zwei Varianten des Sessions-Managements. In beiden Fällen wird die Session durch den Initiator initiiert. Er sendet nach einer erfolgreichen Suche eine Anfrage, die angibt, ob die Session durch einen PULL- oder einen PUSH-Mechanismus aufrechterhalten werden soll. Der PULL Mechanismus stellt einen normalen Ping-Pong Mechanismus dar, der immer wiederholt wird. Dabei erfolgt in regelmäßigen Abständen immer eine Ping-Anfrage vom Initiator an den Peer. Dieser muss innerhalb einer bestimmten Zeit antworten, ansonsten wird die Session verworfen und eine neue Suche eingeleitet. Beim PUSH Keep Alive Protokoll, das durch eine entsprechende Anfrage vom Initiator an den Peer initiiert wird, hängt die Session überwiegend von der rechtzeitigen Zustellung einer 'alive'-Nachricht vom Peer an den Initiator ab. Wird diese Nachricht nicht rechtzeitig zugestellt, verwirft der Initiator die Session und beginnt mit einer neuen Suche.

Es sind Interaktions-Protokolle unter Berücksichtigung des aktuellen Batteriestandes vorgesehen, insbesondere Protokolle zur Entladung der Batterie, zum Abgleich des aktuellen Batterie-Zustands und zur Modifikation der Regelbasis.

Bei der Entladung ist der Initiator des Protokolls vorzugsweise der SEA, der die Entladung einer bestimmten Batterie für einen bestimmten berechneten Zeitpunkt vorgesehen hat. Dabei muss er darauf achten, dass die entsprechende Entladung immer nur dann erfolgen kann, wenn der aktuelle Stand der Batterie den Anforderungen der Entladung genügt. Ist dies nicht der Fall, kann die Entladung über diese Batterie nicht erfolgen, sondern muss entweder über eine andere Energiequelle erfolgen oder die Anforderung muss neu berechnet und entsprechend neu eingeleitet werden. Die Schwierigkeit dabei ist, dass die Entladung zu einer bestimmten Zeit erfolgen soll, und dieser Zeitpunkt bzw. diese Zeitspanne nach Möglichkeit eingehalten werden muss. Wenn das nicht möglich ist, muss neu geplant werden. Die Entladung erfordert die Synchronisation von zwei Tätigkeiten. Auf der einen Seite muss der SEC überprüfen, ob er die geforderte Schaltung durchführen kann. Ist dies nicht der Fall, muss er eine Fehlermeldung senden, welche entweder zu einer neuen Zeitplanung oder zum Abbruch der Entladung führt. Hat der SEC seine Schaltung vorgenommen, kann eine Anforderung an den SA gesendet werden, welcher letztlich die Entladung initiiert. Während der gesamten Interaktion muss auch immer wieder der Ladestand der Batterie überprüft werden. Sollte die Batterie nicht in der Lage sein, die angeforderte Energie zu liefern, muss eventuell der gesamte Prozess (auch nachdem der SEC erfolgreich die Schaltung vorgenommen hat), wieder rückgängig gemacht werden. In diesem Fall bleibt die Möglichkeit einer erneuten Planung oder eines endgültigen Abbruchs.

Der Abgleich des Batterie-Zustandes kann entweder über ein PULL-Szenario oder über ein PUSH-Szenario realisiert werden. Das regelmäßig wiederkehrende PULL-Szenario erfolgt sowohl vom SA als auch dem SEA. Dadurch erhalten beide den aktuellen Batterie-Zustand auf Anfrage. Das PULL-Szenario kann vorteilhaft sein, da bei einer eventuell ausbleibenden Antwort des CA innerhalb der Wartezeit der Anfrage von einer Fehlfunktion ausgegangen werden kann. Dies kann durch einen eventuellen Ausfall der Kommunikations-Infrastruktur zu Stande kommen oder durch eine anderweitige technische Fehlfunktion. Erfolgt der Abgleicht des Batteriezustandes in einem regelmäßigen PUSH-Szenario, so übermittelt der CA selbständig und autonom den aktuellen Batterie-Zustand sowohl an den SA als auch an den SEA. Die Anforderung einer spezifischen Batterie-Entlade-Kapazität kann durch den SEA initiiert werden. Dieser überprüft ständig den Energie-Bedarf der Wohnung des Nutzers. Über den Energiebedarf wird berechnet, wie viel davon anteilig durch die angeschlossenen mobilen Energie-Quelle (Autobatterien etc) eingespeist werden kann. Handelt es sich bei der mobilen Energie-Quelle um eine angeschlossene Autobatterie, dann wird beispielsweise eine Anforderung für eine bestimmte Kapazität an den SA geschickt, welcher in der Folge mit dem CA in Verbindung tritt.

Der An- und Abmeldungs-Prozess (Login, Logout) läuft bevorzugt wie folgt ab: Die Kommunikation erfolgt über eine gesicherte W-LAN Verbindung, wobei die Sitzung initiiert wird, nachdem das Fahrzeug an die Station angedockt wurde. Nach dem erfolgreichen Handshake (= gegenseitige Authentifizierung) sendet der CA Daten bezüglich der Batterie (technische Merkmale, Zustand). Wird die physische Verbindung zwischen Fahrzeug und Ladestation getrennt, wird auch die Kommunikationsverbindung in beidseitigem Einvernehmen aufgelöst und aktualisierte Informationen dem CA übermittelt.

Der Prozess für die Neuprogrammierung (Reprogram) setzt eine Interaktion zwischen SEA und SEC voraus und kann beispielsweise durch den Nutzer initiiert werden, indem er die Regelbasis (Nutzerpräferenzen oder andere im Nutzer-Profil vorhandene Pläne und Regeln) modifiziert. Der SEA fordert die aktuelle Regelbasis vom Energie-Controller (d.h. dem SEC) an und gibt diese dem Nutzer zur Modifikation frei. Nach der Modifikation wird die veränderte Regelbasis an den Energy Controller übergeben.

Wie weiter oben bereits erwähnt, residieren die Agenten vorzugsweise auf 3 verschiedenen sogenannten "Nodes", denen jeweils eine bestimmte Domäne unterliegt. Jeder Node läuft in einer JVM (Java Virtual Machine), die wiederum jeweils auf einem Rechner des Fahrzeugs (Car-Node), der Station (Station-Node) oder im Heimbereich (Home-Node) installiert ist. Die Car Node befindet sich - wenn es sich bei der mobilen Energie-Quell um ein Fahrzeug handelt - innerhalb des Fahrzeugs auf einem Rechner. Auf dem Car-Node befindet sich der CA, der bei seinen Aufgaben Zugriff auf die internen Software-Mechanismen des Fahrzeugs hat. Dadurch kann er aktuelle Werte über den, Ladezustand der Batterie erhalten. Die Station-Node befindet sich beispielsweise neben dem Parkplatz des Fahrzeugs. Der SA versucht von diesem Node aus Kontakt mit einem CA herzustellen und ggf. aufrechtzuerhalten. Der Home-Node befindet sich im Heim-Bereich des Nutzers. Dort werden sämtliche Daten die den Nutzer betreffen zusammengeführt.

Im Folgenden wird die Erfindung anhand von Abbildungen und Beispielen näher erläutert, wobei sie sich natürlich nicht auf die darin beschriebenen Ausführungsformen beschränkt.

### Abbildungen:

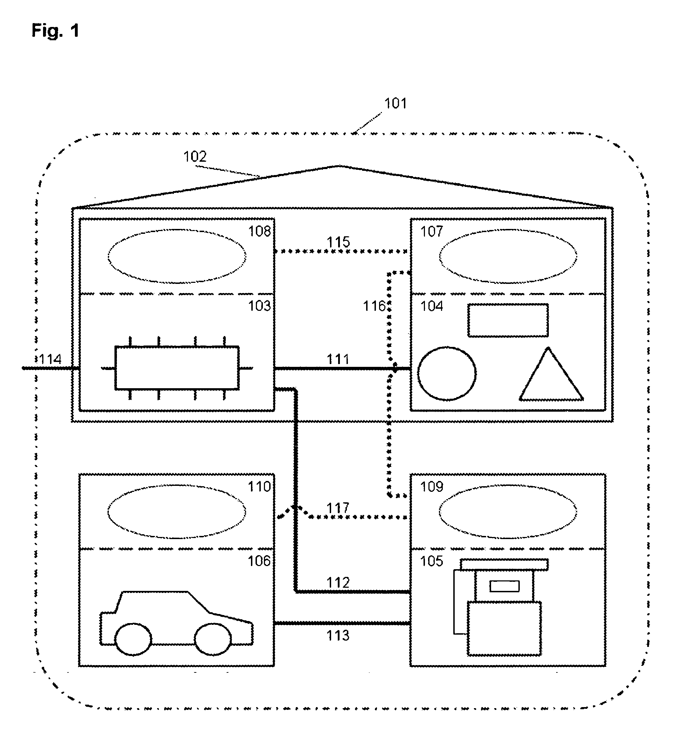

**Fig.1****:** Darstellung des Gesamtsystems, Überblick über die Kommunikation der Agenten untereinander.
**Fig.2****:** Planung der Energie-Nutzung durch den SEA
**Fig.3****:** Aktivitäten des CA, Kontaktaufnahme mit SA
**Fig 4****:** Prognostizierter Lastgang der Wohnung

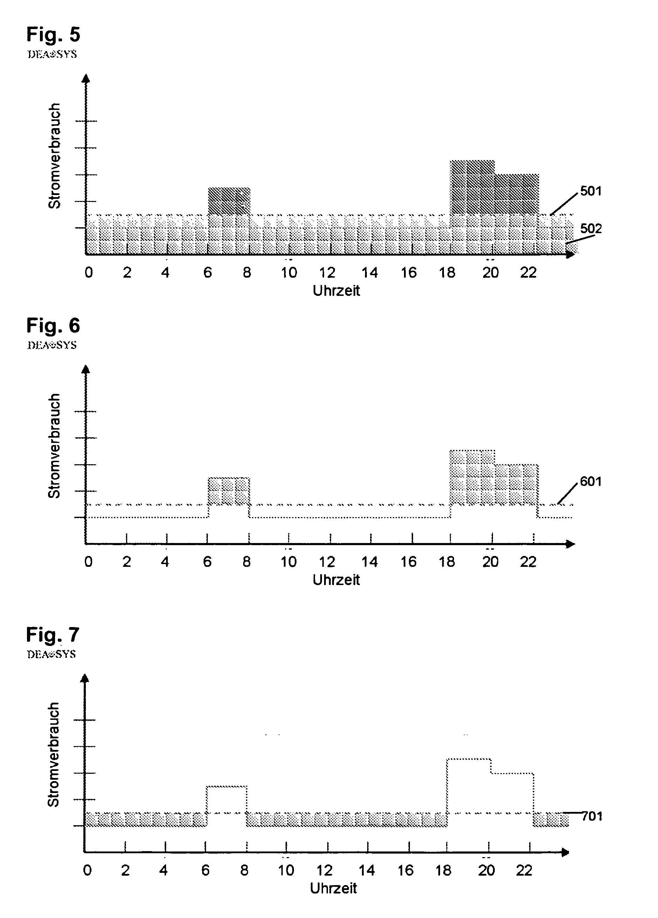

**Fig 5****:** Zu verlagernde "Energiepakete" werden identifiziert
**Fig 6****:** Energiepakete, die vom Auto an die Wohnung übertragen werden
**Fig 7****:** Energiepakete, die vom Netz an die Batterie übertragen werden

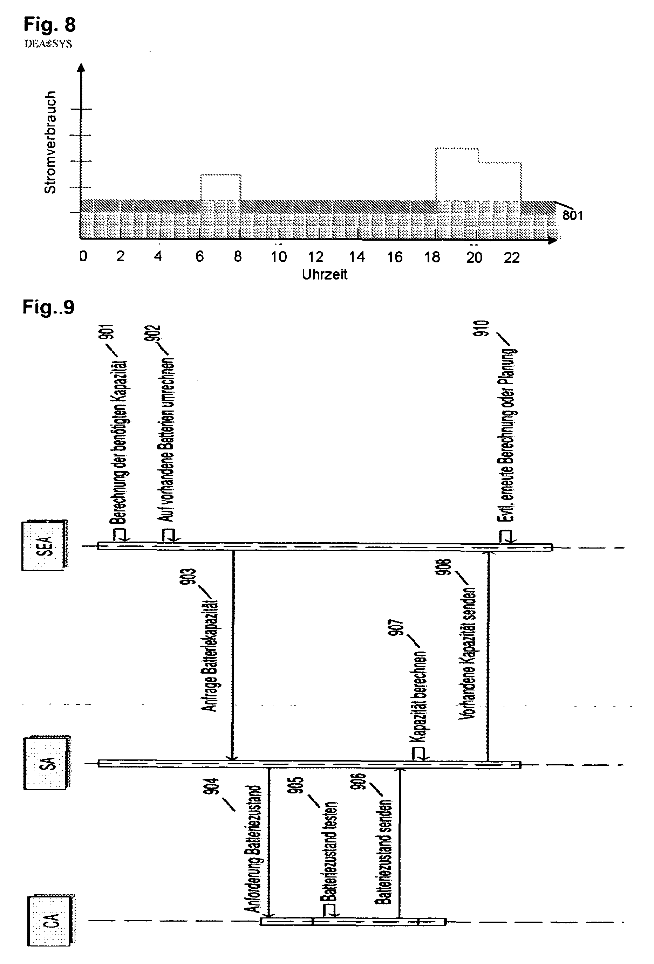

**Fig 8****:** Durch Zuschalten der Batterie geglättete Netzlast
**Fig 9****:** Anforderung Batterie-Entladekapazität

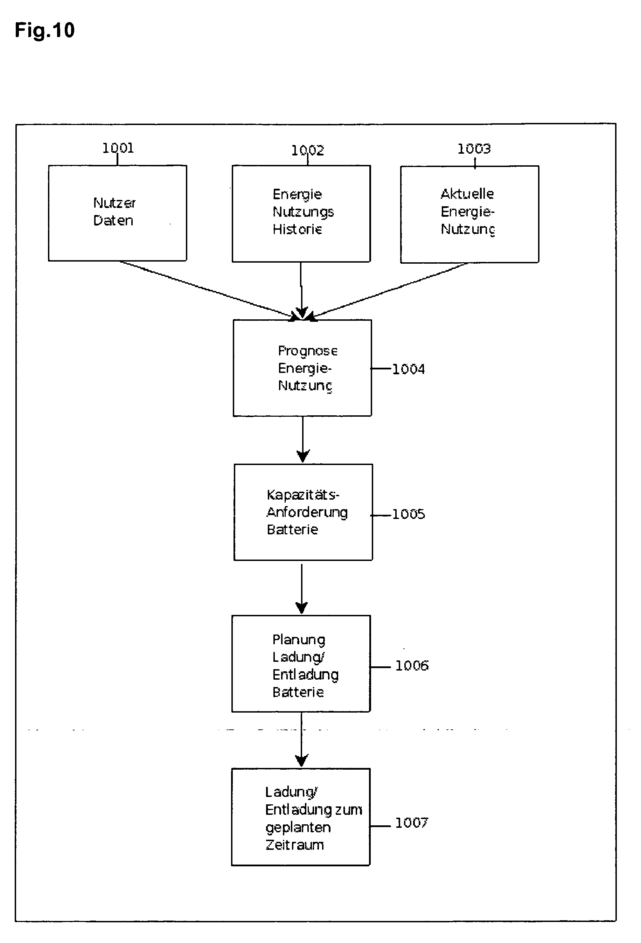

**Fig 10****:** Vereinfachtes Diagramm zur Darstellung der Vorgehensweise des SEA (vgl. auch Fig.2)
**Fig 11****:** Batterie-Entladung (Decharge).
**Fig 12****:** Einschub: Entlade-Szenario (Interaktion) aus Fig.11. Beschreibt das Vornehmen der Schaltung bei der Batterie-Entladung (Decharge)

### Beispiel:

Das folgende Ausführungsbeispiel versucht anhand eines Szenarios den Ablauf der Vorgänge im verteilten lokalen System beispielhaft darzustellen. Dabei wird der Vorgang beschrieben, wie sich das System bei der Entladung/Ladung der Batterie verhält. Um aber das Szenario in den Gesamtablauf einzubetten, ist die Beschreibung von Szenarien notwendig, die zeitlich unabhängig von der eigentlichen Entladung stattfinden können. Dies betrifft zum Beispiel die Planung der Entladung durch den SEA, die im Beispiel anhand von Benutzer-Präferenzen, Benutzer-Historie und der aktuellen Energienutzung festgelegt wird.

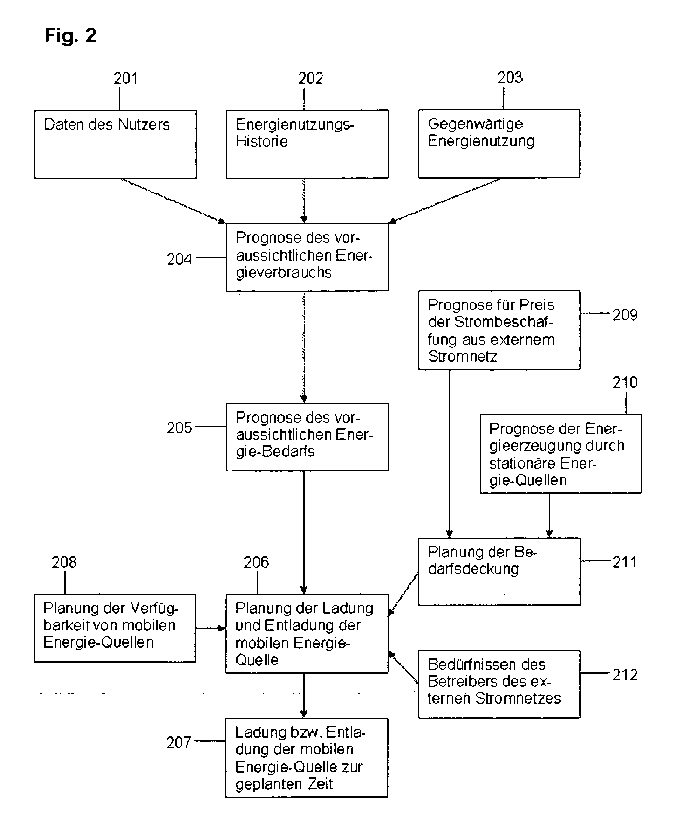

Die Planung einer optimierten Energienutzung im System durch den SEA erfolgt z.B. wie in Fig. 2 dargestellt. Der SEA benutzt zur Planung Daten aus unterschiedlichen Quellen. Dabei wird zum Ersten auf die Daten des Nutzers **(201)** zurückgegriffen, dessen Terminplanung eine entscheidende Rolle für die Planung des SEA spielt. Wichtig sind beispielsweise die Bewegungsdaten des Nutzers, also z.B. ein geplanter erhöhter Energieverbrauch im Heimbereich oder geplante Extrafahrten mit dem Fahrzeug, die eine Ladung der mobilen Energie-Quelle notwendig machen. Des Weiteren wird die Energienutzungs-Historie berücksichtigt **(202),** anhand derer man das gegenwärtige bzw. zukünftige Verhalten des Nutzers bzw. die gegenwärtige oder zukünftige Energienutzung einschätzen kann. Als Drittes betrachtet man die gegenwärtige Energienutzung **(203)** im Heimbereich. Aus diesen drei Faktoren kann ein Verlauf der Energienutzung, d.h. der voraussichtliche Energieverbrauch prognostiziert **(204)** werden. Dadurch werden etwaige Lastspitzen vorhergesagt, für die eine Kapazitäts-Anforderung, d.h. eine Prognose des voraussichtlichen Energie-Bedarfs (205) berechnet wird. Der Preis der Strombeschaffung aus einem externen Stromnetz wird auf der Grundlage von Informationen wie beispielsweise dem EEX (European Energy Exchange) Day Ahead (Strombörse), dem Terminmarkt (Strombörse) oder Bedingungen wie sie in Verträgen mit Energieversorgungsunternehmen (EVU) festgehalten sind, prognostiziert **(209).** Darüber hinaus muss eine Prognose der Energieerzeugung durch stationäre Energie-Quellen bzw. eine Prognose der Verfügbarkeit von Energie aus stationären Energie-Quellen erstellt werden **(210).** Diese hängt bei Einsatz von Photovoltaik-Anlagen oder Windkraftanlagen vom Wetter und beim Betrieb eines kleinen Blockheizkraftwerks von den Brennstoffpreisen ab. Auf der Grundlage dieser Prognose **(210)** und der Prognose des Strompreises **(209)** kann nun geplant werden, wie der Bedarf an Energie in Bezug auf die Kosten am Besten zu decken wäre **(211).** Gegebenenfalls sind außerdem die Bedürfnisse des Stromnetzbetreibers bezüglich der Netzstabilität zu berücksichtigen **(212).** Aus den Informationen zur Verfügbarkeit der mobilen Energie-Quellen **(208),** der Prognose des voraussichtlichen Energiebedarfs **(205),** der Planung der Bedarfsdeckung **(211)** und gegebenenfalls den Bedürfnissen des Stromnetzbetreibers **(212)** wird schließlich ein Plan für die Ladung und Entladung der mobilen Energie-Quellen erstellt **(206),** d.h. es wird ermittelt, wann ein Teil des voraussichtlichen Energie-Bedarfs durch mobile Energie-Quellen gedeckt werden soll und wann diese wieder geladen werden sollen. Entsprechend dieses Plans **(206)** erfolgt dann eine Ladung bzw. Entladung der mobilen Energie-Quellen **(207).**

Einige der SEA-Aktivitäten können unabhängig davon sein, ob die mobile Energie-Quelle (hier: Fahrzeug mit Batterie) an das System angeschlossen ist oder nicht. Zum Beispiel können aus der Energienutzungs-Historie schon vorher Schlüsse gezogen werden. Diese sollten aber mit aktuellen Daten, wie beispielsweise denjenigen im Nutzer-Profil (z. B. aktueller Terminplan des Nutzers) abgeglichen werden.

Das verteilte System kann nur funktionsfähig sein, wenn die Komponenten, die dynamisch hinzugefügt oder entfernt werden können (mobile Energie-Quellen bzw. CA), automatisch gefunden und integriert werden können. Dazu dient beispielsweise ein Broadcast Suchmechanismus des SA. Ebenso ist ein Broadcast Mechanismus auf der Seite des CA denkbar, jedoch soll im Folgenden nur eine Variante eingegangen werden.

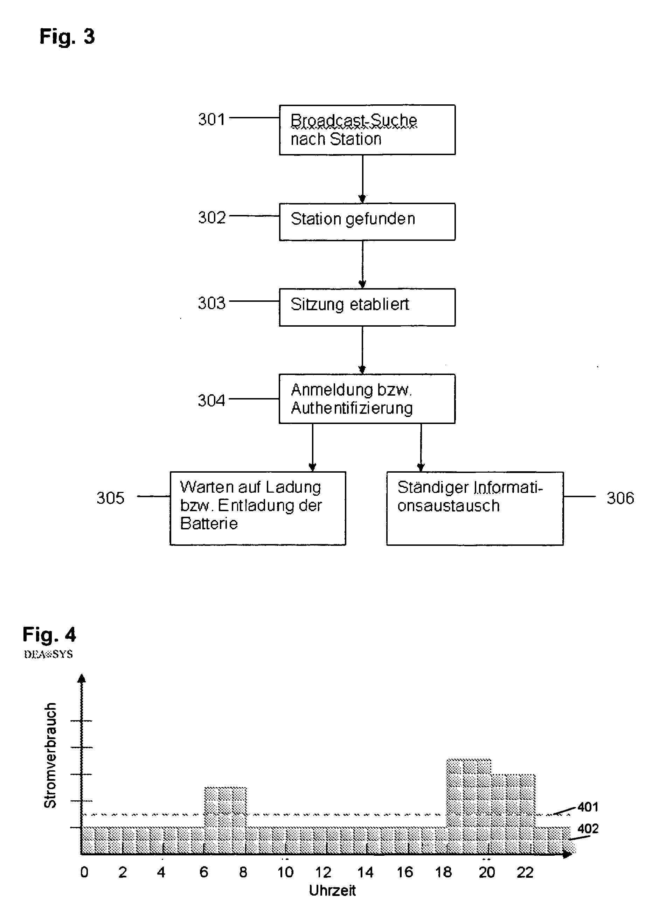

Einige Aktivitäten des CA stellen sich wie in **Fig. 3** veranschaulicht dar. Der CA wird über eine Broadcast-Suche **(301)** des SA gefunden **(302).** Dann wird zwischen SA und CA eine Session aufgebaut **(303)** und ein Login/Authentifizierungs-Prozess durchgeführt **(304).** Der CA ist nun an das dezentrale Energiemanagement angeschlossen und kann auf das Laden oder Entladen der Batterie warten (305). Gleichzeitig werden ständig Informationen zwischen dem CA und dem restlichen System, insbesondere dem SA und dem SEA ausgetauscht **(306).** Dies betrifft Informationen über den Batterie-Zustand und die Nutzerdaten (Daten in den Nutzer-Profilen), die Aufschluss über die weiteren Pläne des Nutzers geben.

Basis der Flexibilität eines verteilten Agentensystems ist die Kommunikation der Agenten untereinander. Sie ist wiederum Basis der Kooperation der Agenten untereinander. Damit die Kommunikation und Kooperation funktionieren kann, müssen die Agenten immer über aktuelles Wissen über ihre Nachbarn und Kommunikations-Partner verfügen. Dazu gehört die Information, ob der Partner immer noch existiert, ob er in der Lage ist, zu kommunizieren oder eine Anfrage zu beantworten. Sollte dies nicht möglich sein, müsste eine Fehlersuche oder eine alternative Problemlösung der Aufgabe gesucht werden, die das System bearbeiten soll. Die einfachste Form, die Existenz eines Nachbarn festzustellen, ist der Aufbau einer Interaktion, die in einem regelmäßigen Intervall kleine Nachrichten hin und her schickt. Der Zustand der regelmäßigen, ununterbrochenen Kommunikation wird als Session bezeichnet und die Aufrechterhaltung als "Session KeepAlive" oder "KeepAlive". Der Initiator der Session kann prinzipiell jeder Agent sein. Der Austausch solcher Session Informationen findet also zum Beispiel zwischen dem CA, SA und dem SEA statt. Der Austausch dieser Information betrifft den Anwendungsfall des verteilten Agentensystems. Es wird sichergestellt dass die relevanten Informationen ausgetauscht werden, die notwendig sind um das verteilte Energiemanagement zu betreiben. Dabei werden zum Beispiel die Batterie-Informationen ausgetauscht oder eventuelle Anwenderinformationen (Daten aus den Nutzer-Profilen).

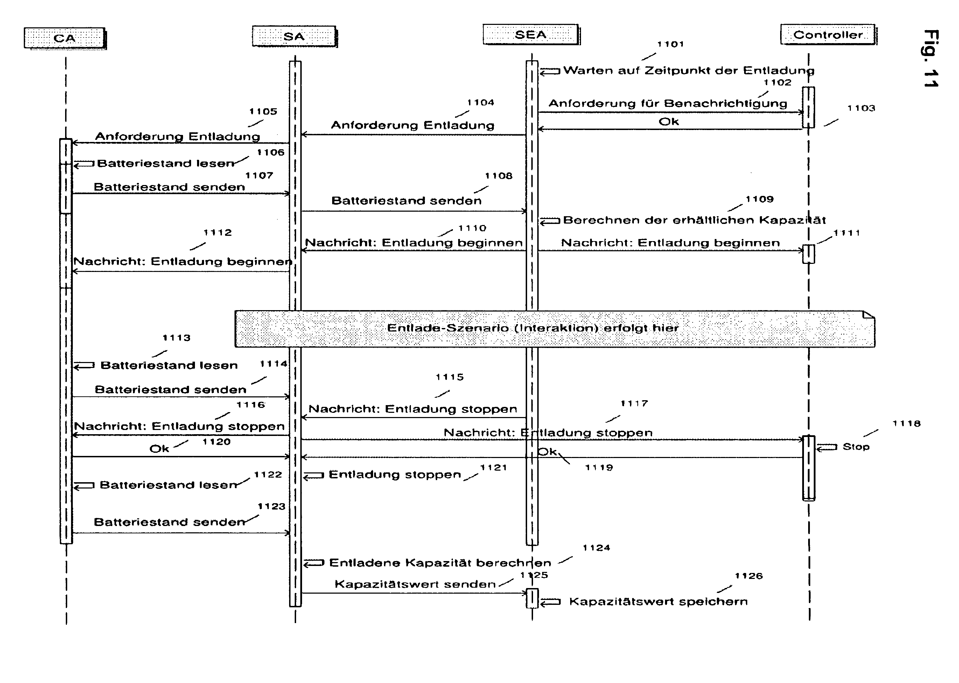

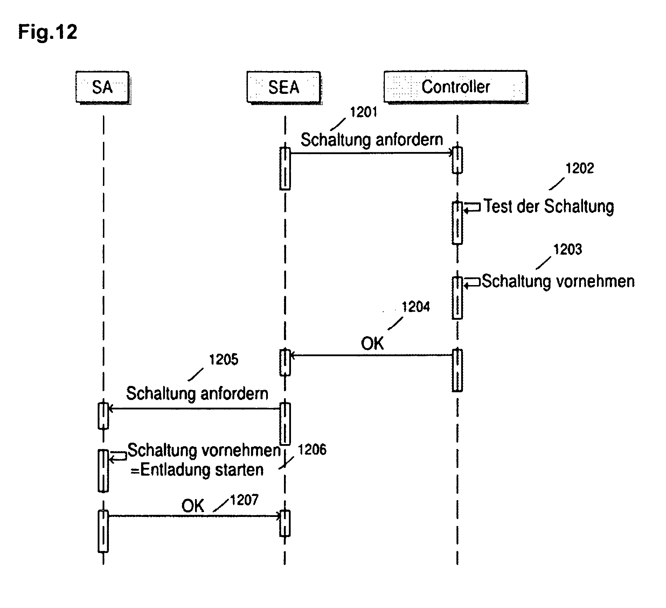

Es sind Interaktions-Protokolle unter Berücksichtigung des aktuellen Batteriestandes vorgesehen, insbesondere Protokolle zur Entladung der Batterie, zum Abgleich des aktuellen Batterie-Zustands und zur Modifikation der Regelbasis. Bei der Entladung (vgl. **Fig.12** ggf. in Verbindung mit Fig.11) ist der Initiator des Protokolls vorzugsweise der SEA, der die Entladung einer bestimmten Batterie für einen bestimmten berechneten Zeitpunkt vorgesehen hat. Dabei muss er darauf achten, dass die entsprechende Entladung immer nur dann erfolgen kann, wenn der aktuelle Stand der Batterie den Anforderungen der Entladung genügt. Ist dies nicht der Fall, kann die Entladung über diese Batterie nicht erfolgen, sondern muss entweder über eine andere Energiequelle erfolgen oder die Anforderung muss neu berechnet und entsprechend neu eingeleitet werden. Die Schwierigkeit dabei ist, dass die Entladung zu einer bestimmten Zeit erfolgen soll, und dieser Zeitpunkt bzw. diese Zeitspanne nach Möglichkeit eingehalten werden muss. Wenn das nicht möglich ist, muss neu geplant werden. Die Entladung erfordert die Synchronisation von zwei Tätigkeiten. Auf der einen Seite muss der SEC überprüfen, ob er die geforderte Schaltung durchführen kann. Ist dies nicht der Fall, muss er eine Fehlermeldung senden, welche entweder zu einer neuen Zeitplanung oder zum Abbruch der Entladung führt. Hat der SEC seine Schaltung vorgenommen, kann eine Anforderung an den SA gesendet werden, welcher letztlich die Entladung initiiert. Während der gesamten Interaktion muss auch immer wieder der Ladestand der Batterie überprüft werden. Sollte die Batterie nicht in der Lage sein, die angeforderte Energie zu liefern, muss eventuell der gesamte Prozess (auch nachdem der SEC erfolgreich die Schaltung vorgenommen hat), wieder rückgängig gemacht werden. In diesem Fall bleibt die Möglichkeit einer erneuten Planung oder eines endgültigen Abbruchs.

### Bezugszeichenliste:

- 101.: System
- 102.: Heimbereich
- 103.: Energie-Controller
- 104.: Energie-Verbraucher und stationäre Energie-Quellen
- 105.: Station
- 106.: Mobile Energie-Quelle
- 107.: Smart Energy Agent (SEA)
- 108.: Smart Energy Controller (SEC)
- 109.: Station Agent (SA)
- 110.: Car Agent (CA)
- 111.: Energieübertragungseinrichtung / Energiefluss
- 112.: Energieübertragungseinrichtung / Energiefluss
- 113.: Energieübertragungseinrichtung / Energiefluss
- 114.: Energieübertragungseinrichtung / Energiefluss (Verbindung zu externem Energie-Netz bzw. Stromnetz)
- 115.: Schnittstelle / Datenfluss
- 116.: Schnittstelle / Datenfluss
- 117.: Schnittstelle / Datenfluss
- 201.: Daten des Nutzers (Nutzer-Profil)
- 202.: Energienutzungs-Historie
- 203.: Gegenwärtige Energienutzung
- 204.: Voraussichtlicher Energieverbrauch (Prognose)
- 205.: Voraussichtlichen Energie-Bedarf (Prognose)
- 206.: Planung der Ladung und Entladung der mobilen Energie-Quelle
- 207.: Ladung bzw. Entladung der mobilen Energie-Quelle zur geplanten Zeit
- 208.: Planung der Verfügbarkeit von mobilen Energie-Quellen
- 209.: Prognose für Preis der Strombeschaffung aus externem Stromnetz
- 210.: Prognose der Energieerzeugung durch stationäre Energie-Quellen
- 211.: Planung der Bedarfsdeckung
- 212.: Bedürfnisse des Betreibers des externen Stromnetzes (bspw. Regelstrom)

- 301.: Broadcast-Suche des CA nach einer Station
- 302.: Station gefunden
- 303.: Sitzung zwischen CA und SA etabliert
- 304.: Anmeldung bzw. Authentifizierung des CA beim SA
- 305.: Warten auf Ladung bzw. Entladung der Batterie
- 306.: Ständiger Informationsaustausch zwischen CA und SA

- 401.: Schwellenwert, d.h. idealer Lastgang des Systems.
- 402.: Prognostizierter Lastgang des Heimbereichs (z.B. einer Wohnung), d.h. prognostizierter Energieverbrauch (dargestellt als Energiepakete).

- 501.: Schwellenwert, d.h. idealer Lastgang des Systems
- 502.: Prognostizierter Lastgang des Heimbereichs (z.B. einer Wohnung), d.h. prognostizierter Energieverbrauch (dargestellt als Energiepakete). Lastspitzen, d.h. Energie-Verbrauchswerte oberhalb des Schwellenwerts werden identifiziert (dunkel unterlegte Energiepakete - diese müssen auf andere Zeitpunkte verlagert werden, um den prognostizierten Lastgang dem idealen Lastgang anzunähern).

- 601.: Schwellenwert, d.h. idealer Lastgang des Systems. Die identifizierten Lastspitzen (Energie-Verbrauchswerte des Heimbereichs oberhalb des Schwellenwerts, dargestellt als Energiepakete) werden dadurch gedeckt, dass Energie von der mobilen Energie-Quelle (z.B. Auto) an den Heimbereich, d.h. an das interne Energie-Netz übertragen wird.

- 701.: Schwellenwert, d.h. idealer Lastgang des Systems. Die mobile Energie-Quelle (z.B. Batterie eines Autos) wird in der Zeit, in der der prognostizierte Lastgang des Heimbereichs unterhalb des Schwellenwerts liegt, mit Energie (dargestellt als Energiepakete) aus dem internen Energie-Netz geladen.

- 801.: Schwellenwert, d.h. idealer Lastgang des Systems. Die Lastgangkurve des Systems hat den idealen Wert erreicht.

- 901.: Berechnung der benötigten Kapazität durch den SEA
- 902.: Umrechnung der benötigten Kapazität auf die vorhandenen Batterien durch den SEA
- 903.: SEA sendet Anfrage zur Batteriekapazität an den SA
- 904.: SA fordert Informationen zum Batteriezustand beim CA an
- 905.: CA testet Batteriezustand
- 906.: CA sendet Informationen zum Batteriezustand an den SA
- 907.: SA berechnet Batteriekapazität
- 908.: SA sendet Informationen zur vorhandenen Batteriekapazität an den SEA
- 910.: Eventuell erneute Erstellung eines Plans für eine optimierte Energienutzung im System durch den SEA

- 1001.: Nutzerdaten (Nutzer-Profil)
- 1002.: Energie-Nutzungshistorie
- 1003.: Aktuelle Energie-Nutzung
- 1004.: Prognose der Energie-Nutzung
- 1005.: Kapazitätsanforderung an die Batterie
- 1006.: Planung, Ladung/Entladung der Batterie
- 1007.: Ladung/Entladung zum geplanten Zeitpunkt

- 1101.: SEA wartet auf den Zeitpunkt der Entladung der mobilen Energie-Quelle
- 1102.: SEA fordert eine Benachrichtigung beim Energie-Controller an, wann eine Entladung der mobilen Energie-Quelle stattfinden soll
- 1103.: Energie-Controller sendet positive Benachrichtigung betreffend die Entladung der mobilen Energie-Quelle an SEA
- 1104.: SEA teilt dem SA mit, dass eine Entladung vorgenommen werden soll.
- 1105.: SA teilt dem CA mit, dass eine Entladung vorgenommen werden soll.
- 1106.: CA überprüft den Batteriestand (vorhandene Energiemenge)
- 1107.: CA sendet Informationen zum Batteriestand an den SA
- 1108.: SA sendet Informationen zum Batteriestand an den SEA
- 1109.: Berechnung der aktuell erhältlichen Kapazität (verfügbare Energiemenge) der Batterie durch den SA
- 1110.: SEA sendet Aufforderung zum Beginn der Entladung an den SA
- 1111.: SEA sendet Aufforderung zum Beginn der Entladung an den Energie-Controller
- 1112.: SA sendet Aufforderung zum Beginn der Entladung an den CA
- 1113.: CA überprüft den Batteriestand
- 1114.: CA sendet Informationen zum Batteriestand an den SA
- 1115.: SEA sendet Aufforderung zum Stop der Entladung an den SA
- 1116.: SA sendet Aufforderung zum Stop der Entladung an den CA
- 1117.: SA sendet Aufforderung zum Stop der Entladung an den Energie-Controller
- 1118.: Energie-Controller stoppt Entladung
- 1119.: Energie-Controller sendet positive Benachrichtigung betreffend den Stop der Entladung an den SA
- 1120.: CA sendet positive Benachrichtigung betreffend Stop der Entladung an den SA
- 1121.: SA stoppt Entladung
- 1122.: CA überprüft den Batteriestand
- 1123.: CA sendet Informationen zum Batteriestand an den SA
- 1124.: SA berechnet die entladene Kapazität (d.h. die aus der Batterie entnommene Energiemenge)
- 1125.: SA sendet Informationen zur Kapazität an den SEA
- 1126.: SEA speichert Informationen zur Kapazität

- 1201.: Der SEA fordert die Schaltung beim Controller an
- 1202.: Eventuell testet der Controller vorher noch, ob eine Schaltung möglich ist
- 1203.: Der Controller ermöglicht nun mit einer Schaltung den Energiefluss vom Auto zum Heimbereich (= Schaltung vornehmen)
- 1204.: Der Controller benachrichtigt den SEA über die erfolgreich vorgenommene Schaltung
- 1205.: Der SEA fordert nun die Schaltung auf der Seite des SA an (damit die Batterie des Autos hinzugeschaltet werden kann)
- 1206.: Der SA nimmt die Schaltung vor und die Entladung beginnt
- 1207.: Der SA benachrichtigt den SEA über die vorgenommene Schaltung

## Patentansprüche

1. Computergestütztes Verfahren zum automatischen Ausgleich der Lastspitzen zur Optimierung der Energienutzung in einem lokalen System beinhaltend einen oder mehrere Energie-Verbraucher, **dadurch gekennzeichnet, dass** das Verfahren zumindest die folgenden Schritte aufweist:
a) Bereitstellen von mindestens drei unterschiedlichen Agenten, welche sich räumlich getrennt in drei Hauptdomänen (Heimbereich, Station und mobile Energie-Quelle) befinden, wobei
- mindestens ein Agent (Smart Energy Agent, SEA) auf einem Computer ausgeführt wird, der einem systeminternen Energie-Netz zugeordnet ist, an welches die Energie-Verbraucher angeschlossen sind,
- mindestens ein Agent (Car Agent, CA) auf einem Computer ausgeführt wird, der einer mobilen Energie-Quelle zugeordnet ist,
- mindestens ein Agent (Station Agent, SA) auf einem Computer ausgeführt wird, der einer oder mehreren ortsfesten Andock-Stationen für mobile Energie-Quellen zugeordnet ist, wobei die Andock-Stationen an das systeminterne Energie-Netz angeschlossen sind,
- die Agenten Situationen überwachen, das Verhalten des Systems oder des Nutzers antizipieren, Optimierungen im Systemablauf durchführen, Fehler erkennen und entsprechend kommunizieren sowie korrigieren,
b) Erstellung eines Plans für eine optimierte Energienutzung im System auf der Grundlage von mindestens den folgenden Informationen:
- Energiemengen E₁-E_{K} (K ∈ IN; K ≥ 1), welche in einer Anzahl an mobilen Energie-Quellen Q₁-Q_{K} (K ∈ IN; K ≥ 1) gespeichert sind,
- Energienutzung im System zu den Zeitpunkten T₁-T_{c} (C ∈ IN; C ≥ 1) oder einer Teilmenge davon,
wobei die Erstellung des Plans durch einen Agenten erfolgt, wobei es sich beim Agenten vorzugsweise um den SEA handelt,
c) Regelung des Energieflusses mindestens zwischen
- mobilen Energie-Quellen, welche an Stationen des Systems angedockt sind und
- den Energie-Verbrauchern des Systems,
auf der Grundlage des erstellten Plans, wobei die Regelung direkt oder indirekt durch einen Agenten erfolgt, wobei es sich beim Agenten vorzugsweise um den SEA handelt;
d) Der SA übernimmt mindestens folgende Funktionen:
- Ermittlung, wann sich eine mobile Energie-Quelle der Station nähert, wobei es bevorzugt ist, dass durch ein Broadcast-Signal ermittelt wird, ob sich eine mobile Energie-Quelle der Station nähert und/oder eine mobile Energie-Quelle in der Nähe der Station vorhanden ist und/oder
- Aufbau und/oder Aufrechterhaltung einer sicheren Kommunikationsverbindung zum CA und/oder zum SEA, und/oder
- Austausch von Authentifizierungsdaten mit dem CA, und/oder
- Durchführung eines Handshake-Vorgangs mit dem CA, wobei nach Übermittlung der korrekten Authentifizierungsdaten vom CA an den SA die mobile Energie-Quelle mittels einer Energieübertragungseinrichtung an das systeminterne Energie-Netz angeschlossen wird und
e) der Austausch von Information zwischen den Agenten findet in Form von Ontologien statt, bei denen es sich um zustandsbeschreibende Datensätze handelt, welche ein zielgerichtetes Handeln der Agenten ermöglichen,
wobei die Agenten durch ihre kommunikativen Fähigkeiten untereinander zusammenarbeiten, eigenständig Berechnungen durchführen können und dadurch in der Lage sind, die lokale Energienutzung in einem nichtöffentlichen Netz autonom zu regulieren.

2. Computergestütztes Verfahren nach Anspruch 1, **dadurch gekennzeichnet, dass** die Erstellung des Plans für eine optimierte Energie-Nutzung im System auf der Grundlage mindestens eines Datensatzes erfolgt, der aus der nachfolgenden Gruppe entnommen ist:
- dem voraussichtlichen Gesamtenergieverbrauch Z zu den (zukünftigen) Zeitpunkten T_{G}-T_{H} (G,H ∈ IN; C≤G≤H), wobei der Energieverbrauch eines oder mehrerer der Energie-Verbraucher zu den Zeitpunkten T₁-T_{c} (C ∈ IN; C ≥ 1) oder einer Teilmenge davon gemessen wird, wobei ein Agent aus dem Energieverbrauch zu den Zeitpunkten T₁-T_{c} (C ∈ IN; C ≥ 1) oder einer Teilmenge davon den Gesamtenergieverbrauch G zu den Zeitpunkten T_{D}-T_{E} (D,E ∈ IN; 1≤D≤E≤C) berechnet und anschließend, auf der Grundlage von zumindest dem Gesamtenergieverbrauch G zu den Zeitpunkten T_{D}-T_{E} oder einer Teilmenge davon, eine Berechnung des voraussichtlichen Gesamtenergieverbrauchs Z zu den (zukünftigen) Zeitpunkten T_{G}-T_{H} (G,H ∈ IN; C≤G≤H) durchgeführt wird, und eine von einem Benutzer des Systems festgelegte geplante Nutzung von Energie-Verbrauchern zu den Zeitpunkten T_{G}-T_{H} oder einer Teilmenge davon, welche vom Benutzer mittels einer Benutzerschnittstelle an einen Agenten übergegeben wird,
- der von Messeinrichtungen gemessenen Energiemenge, welche an eine oder mehreren Energie-Quellen zu den Zeitpunkten T₁-T_{c} oder einer Teilmenge davon zugeführt oder von diesen bezogen wurde,
- eine von einem Benutzer festgelegte, geplante Ladung und/oder Entladung von Energie-Quellen zu der Zeitpunkte T_{G}-T_{H} oder einer Teilmenge davon, welche vom Benutzer mittels einer Benutzerschnittstelle an einen Agenten übergegeben wird,
- der Verfügbarkeit von Strom aus einem externen Stromnetz zu den Zeitpunkten T_{G}-T_{H} oder einer Teilmenge davon, wobei das externe Stromnetz mittels einer Energie-Übertragungseinrichtung mit dem systeminternen Energie-Netz verbunden ist und wobei es sich beim externen Stromnetz vorzugsweise um die öffentliche Stromversorgung handelt,
- Verfügbarkeit und Menge von Brennstoffen zum Betrieb stationärer Energie-Quellen,
- dem Ergebnis einer Berechnung, welche von einem Agenten durchgeführt wird, um zu ermitteln, wie viel des voraussichtlichen Gesamtenergieverbrauchs Z zu den Zeitpunkten T_{G}-T_{H} und/oder des gegenwärtigen Gesamtenergieverbrauchs durch E₁-E_{K} gedeckt werden kann,
- dem voraussichtlichen Strompreis zu den Zeitpunkten T_{G}-T_{H} oder einer Teilmenge davon, wobei der Strompreis auf der Grundlage der normalen Tarife und/oder spezieller Klimatarife und/oder aus dem Handel von Spot- oder Terminprodukten an Strombörsen vorausgesagt wird,
- den voraussichtlichen Brennstoffpreisen zu den Zeitpunkten T_{G}-T_{H} oder einer Teilmenge davon und den Wirkungsgraden der stationären Energie-Quellen, die mit den Brennstoffen betrieben werden, wobei die Brennstoffpreise vorzugsweise auf der Grundlage der gegenwärtigen Brennstoffpreise vorausgesagt werden,
- den zu den Zeitpunkten T₁-T_{c} oder einer Teilmenge davon gemessenen Umweltbedingungen und den Wirkungsgraden der stationären Energie-Quellen, die diese Umweltbedingungen zur Energieproduktion nutzen, wobei es sich bei den Umweltbedingungen vorzugsweise um die Windstärke und/oder Temperatur und/oder Sonneneinstrahlung und/oder Tageslänge handelt,
- den voraussichtlichen Umweltbedingungen zu den Zeitpunkten T_{G}-T_{H} und den Wirkungsgraden der stationären Energie-Quellen, die diese Umweltbedingungen zur Energieproduktion nutzen, wobei es sich bei den Umweltbedingungen vorzugsweise um mindestens ein Merkmal aus der Gruppe bestehend aus Windstärke, Temperatur, Sonneneinstrahlung, Tageslänge, Jahreszeit und Niederschlagsmenge handelt,
- dem Ergebnis einer Berechung, welche durch einen Agenten durchgeführt wird, um zu ermitteln, wie viel des voraussichtlichen Gesamtenergieverbrauchs Z zu den Zeitpunkten T_{G}-T_{H} und/oder des gegenwärtigen Gesamtenergieverbrauchs durch eine oder mehrere an das systeminterne Energie-Netz angeschlossene stationäre Energie-Quellen gedeckt werden kann und/oder wie viel durch E₁-E_{K} gedeckt werden kann und/oder wie viel Energie an Q₁-Q_{K} abgegeben werden kann, so dass: der Wert für den Gesamtenergieverbrauch Z zuzüglich der an Q₁-Q_{K} abgegebenen Energie und abzüglich des durch E₁-E_{K} gedeckten Anteils und abzüglich des durch die stationären Energie-Quellen gedeckten Anteils über die Zeitpunkte T_{G}-T_{H} geringere Schwankungen als der voraussichtliche Gesamtenergieverbrauch Z aufweist und/oder so dass die Kosten für die Deckung des Gesamtenergieverbrauchs minimal sind.

3. Computergestütztes Verfahren nach einem der vorangehenden Ansprüche, **dadurch gekennzeichnet, dass** die Regelung des Energieflusses durch eine Vorrichtung erfolgt, welche Mittel zur Regelung und/oder Schaltung von Stromkreisen im internen Energie-Netz aufweist (Energie-Controller), wobei der Energie-Controller zusätzlich mindestens die folgenden Funktionen übernimmt:
- Aufzeichnung des Energieverbrauchs durch die Energie-Verbraucher und/oder
- Aufbau und/oder Aufrechterhaltung einer sicheren Kommunikationsverbindung zum SEA.

4. Computergestütztes Verfahren nach einem der vorangehenden Ansprüche, **dadurch gekennzeichnet, dass** der CA mindestens eine Funktion übernimmt, die aus der folgenden Gruppe entnommen ist:
- Bereitstellung einer Schnittstelle, über welche der Nutzer der mobilen Energie-Quelle Informationen abfragen und/oder Informationen eingeben kann, wobei zu diesen Informationen vorzugsweise Pläne für die Nutzung der mobilen Energie-Quelle und/oder Angaben zur zulässigen minimalen Energiemenge in der mobilen Energie-Quelle gehören,
- Verwaltung und Aktualisierung von Informationen betreffend den Nutzer der mobilen Energie-Quelle (EQ-Profil), wobei dazu insbesondere auch die geplante Nutzung der mobilen Energie-Quelle gehört und wobei im Falle, dass es sich bei der mobilen Energie-Quelle um ein Fahrzeug handelt, die geplante Nutzung vorzugsweise geplante Fahrten sind,
- Aufzeichnung der gefahrenen Strecken, der dazu benötigten Zeit sowie des damit verbundenen Energieverbrauchs und Vorhersage der Dauer von geplanten Fahrten und des damit verbundenen Energieverbrauchs, wenn es sich bei der mobilen Energie-Quelle um ein Fahrzeug handelt,
- Überwachung des Zustandes der mobilen Energie-Quelle und/oder der in der mobilen Energie-Quelle gespeicherten Energiemenge und Kommunikation des Zustandes und/oder der Energiemenge an den SA,
- Einleitung von Gegenmaßnahmen bei kritischem Zustand der mobilen Energie-Quelle und/oder bei Unterschreitung einer bestimmten Energiemenge in der mobilen Energie-Quelle, neue Zeile beginnen -Regelung des Energieflusses von und zu der mobilen Energie-Quelle,
- Aufbau und/oder Aufrechterhaltung einer sicheren Kommunikationsverbindung zum SA,
- Austausch von Authentifizierungsdaten mit dem SA und/oder Übermittlung von Authentifizierungsdaten an den SA.

5. Computergestütztes Verfahren nach einem der vorangehenden Ansprüche, **dadurch gekennzeichnet, dass** der SA mindestens folgende zusätzliche Funktionen übernimmt:
- Funktion als Kommunikationsbrücke zwischen SEA und CA, insbesondere für die Kommunikation des Zustandes der mobilen Energie-Quelle und/oder der in der mobilen Energie-Quelle gespeicherten Energiemenge an den SEA, und/oder
- Aufzeichnung des Energieflusses vom internen Energie-Netz zur mobilen Energie-Quelle und umgekehrt, sowie Kommunikation der Aufzeichnungen an den SEA.

6. Computergestütztes Verfahren nach einem der vorangehenden Ansprüche, **dadurch gekennzeichnet, dass** der SEA mindestens eine Funktion übernimmt, die aus der nachfolgenden Gruppe entnommen ist:
- Identifikation des Nutzers des Systems über biometrische Verfahren,
- Bereitstellung einer Schnittstelle, über welche der Nutzer des Systems Informationen abfragen und/oder Informationen eingeben kann, wobei zu diesen Informationen vorzugsweise Pläne des Nutzers für die Nutzung der Energie-Verbraucher gehören,
- Verwaltung und Aktualisierung von Informationen betreffend den Nutzer des Systems (Nutzer-Profil), wobei dazu insbesondere auch die geplante Nutzung von Energie-Verbrauchern gehört,
- Erstellung des Plans für eine optimierte Energie-Nutzung im System,
- Regelung des Energieflusses durch Steuerung und/oder Programmierung des Energie-Controllers, wobei es bevorzugt ist, dass die Regelung des Energieflusses außerdem mindestens eine Maßnahme beinhaltet, die der folgenden Gruppe entnommen ist: Gezielte Leistungsdrosselung, Leistungserhöhung, gezielte Ab- und/oder Einschaltung von einzelnen Energie-Verbrauchern oder Gruppen von Energie-Verbrauchern, gezielte Zu- oder Abschaltung von stationären Energie-Quellen, die an das systeminterne Energie-Netz angeschlossen sind,
- Abfrage des Zustandes des Energie-Controllers, insbesondere dessen aktueller Schaltung,
- Aufbau und/oder Aufrechterhaltung einer sicheren Kommunikationsverbindung zum SA und/oder zum Energie-Controller und/oder zum CA.

## Claims

1. A computerised method for automatically balancing peak loads in order to optimise energy utilisation in a local system comprising one or more energy consumers, **characterised in that** the method comprises at least the following steps:
a) Providing at least three different agents which are located spatially separated within three major domains (home domain, station and mobile energy source), wherein
- at least one agent (Smart Energy Agent, SEA) is executed on a computer assigned to a system-internal energy network to which the energy consumers are connected,
- at least one agent (Car Agent, CA) is executed on a computer, which is assigned to a mobile energy source,
- at least one agent (Station Agent, SA) is executed on a computer assigned to one or more stationary docking stations for mobile energy sources, wherein the docking stations are connected to the system-internal energy network,
- the agents monitor situations, anticipate the behaviour of the system or the user, perform optimisations in the system flow, and detect, communicate and correct errors accordingly,
b) Preparing a plan for optimised energy utilisation in the system on the basis of at least the following information:
- energy quantities E₁-E_{K} (K ∈ IN; K ≥ 1) stored in a number of mobile energy sources Q₁-Q_{K} (K ∈ IN; K ≥ 1),
- energy utilisation in the system at points in time T₁-T_{c} (C ∈ IN; C ≥ 1) or a partial quantity thereof,
wherein preparing the plan is carried out by an agent, wherein the agent is preferably the SEA,
c) Regulating the energy flow at least between
- mobile energy sources docked on to stations of the system and
- the energy consumers of the system,
on the basis of the prepared plan, wherein regulation is carried out directly or indirectly by an agent, wherein the agent is preferably the SEA;
d) The SA assumes at least the following functions:
- ascertaining when a mobile energy source is approaching the station, wherein it is preferred to use a broadcast signal for ascertaining whether a mobile energy source is approaching the station and/or a mobile energy source is present in the vicinity of the station and/or
- establishing and/or maintaining a secure communications link with the CA and/or the SEA, and/or
- exchanging authentication data with the CA, and/or
- performing a handshake operation with the CA, wherein following communication of correct authentication data from the CA to the SA, the mobile energy source is connected to the system-internal energy network by means of an energy transmission device and
e) The exchange of information between agents takes place in the form of ontologies, which represent state-describing data records permitting agents to act in a target-oriented manner,
wherein the agents due to their communicative capabilities cooperate with each other, are capable of performing independent calculations and are thus in a position to autonomously regulate local energy consumption in a non-public network.

2. The computerised method according to claim 1, **characterised in that** preparing a plan for optimised energy utilisation in the system is carried out on the basis of at least one data record taken from the following group:
- the anticipated total energy consumption Z at (future) points in time TG-TH (G,H ∈ IN; C≤G≤H), wherein the energy consumption of one or more energy consumers is measured at points in time T₁-T_{c} (C ∈ IN; C ≥ 1) or a partial quantity thereof, wherein an agent, from the energy consumption at points in time T₁-T_{c} (C ∈ IN; C ≥ 1) or a partial quantity thereof, calculates the total energy consumption G at points in time T_{D}-T_{E} (D,E ∈ IN; 1≤D≤E≤C) and wherein thereafter, on the basis of at least the energy consumption G at points in time T_{D}-T_{E} or a partial quantity thereof, a calculation of the anticipated total energy consumption Z is performed at the (future) points in time T_{G}-T_{H} (G,H ∈ IN; C≤G≤H), and a planned utilisation of energy consumers determined by a user of the system which is handed over to an agent by the user via a user interface at points in time T_{G}-T_{H} or a partial quantity thereof,
- the quantity of energy measured by measuring devices, which was fed to, or drawn from, one or more energy sources at points in time T₁-T_{c} or a partial quantity thereof,
- a planned charge and/or discharge of energy sources determined by a user at points of time T_{G}-T_{H} or a partial quantity thereof, which is handed over to an agent by the user via a user interface,
- the availability of power from an external power network at points in time T_{G}-T_{H} or a partial quantity thereof, wherein the external power network is connected via an energy transmission device with the system-internal energy network and wherein the external power network is preferably the public power supply system, and/or
- the availability and amount of fuels for operating stationary energy sources,
- the result of a calculation performed by an agent in order to determine, how much of the anticipated total energy consumption Z at points in time T_{G}-T_{H}, and/or the current total energy consumption can be covered by E₁-E_{K},
- the anticipated electricity price at points in time T_{G}-T_{H} or a partial quantity thereof, wherein the electricity price is predicted on the basis of normal tariffs and/or special climate tariffs and/or from the trade in spot or forward products on power exchanges,
- the anticipated fuel prices at points in time T_{G}-T_{H} or a partial quantity thereof and the efficiencies of stationary energy sources operated by these fuels, wherein the fuel prices are preferably predicted on the basis of current fuel prices,
- the environmental conditions measured at points in time T₁-T_{c} or a partial quantity thereof and the efficiencies of the stationary energy sources utilising these environmental conditions for energy production, wherein the environmental conditions are preferably wind power and/or temperature and/or solar radiation and/or length of day,
- the anticipated environmental conditions at points in time T_{G}-T_{H} and the efficiencies of the stationary energy sources utilising these environmental conditions for energy production, wherein the environmental conditions preferably comprise at least one feature taken from the group consisting of wind power, temperature, solar radiation, length of day, time of year and amount of precipitation,
- the result of a calculation which is carried out by an agent in order to determine, how much of the anticipated total energy consumption Z at points in time T_{G}-T_{H} and/or of the current total energy consumption can be covered by one or more stationary energy sources connected to the system-internal energy network and/or how much can be covered by E₁-E_{K} and/or how much energy can be passed onto Q₁-Q_{K}, so that: the value for the total energy consumption Z plus the energy passed onto Q₁-Q_{K} and minus the portion covered by E₁-E_{K} and minus the portion covered by the stationary energy sources shows lesser fluctuations across the points in time T_{G}-T_{H} than the anticipated total energy consumption Z and/or so that the costs for covering the total energy consumption are minimal.

3. The computerised method according to one of the preceding claims, **characterised in that** regulating the energy flow is performed by a device, which comprises means for regulating and/or switching power circuits in the internal energy network (energy controller), wherein the energy controller additionally assumes at least the following functions:
- recording the energy consumption of the energy consumers and/or
- establishing and/or maintaining a secure communications link to the SEA.

4. The computerised method according to one of the preceding claims, **characterised in that** the CA assumes at least one function taken from the following group:
- providing an interface, via which the user of the mobile energy source can enquire or input information, wherein this information preferably includes plans for utilising the mobile energy source and/or details regarding the admissible minimum energy quantity in the mobile energy source,
- managing and updating information regarding the user of the mobile energy source (EQ profile), including, in particular, the planned usage of the mobile energy source and wherein given the case that the mobile energy source is a vehicle, the planned usage preferably comprises planned trips,
- recording the distances travelled, including the respective time required as well as the associated energy consumption, and predicting the duration of the planned trips and associated energy consumption, if the mobile energy source is a vehicle,
- monitoring the state of the mobile energy source and/or the energy quantity stored in the mobile energy source and communicating the state and/or the energy quantity to the SA,
- initiating countermeasures if the mobile energy source is in a critical state and/or if the energy quantity in the mobile energy source falls below a predetermined level,
- regulating the energy flow to and from the mobile energy source,
- establishing and/or maintaining a secure communications link to the SA,
- exchanging authentication data with the SA and/or transmitting authentication data to the SA.

5. The computerised method according to one of the preceding claims, **characterised in that** the SA assumes at least the following additional functions:
- function as a communication bridge between the SEA and the CA, in particular for communicating the state of the mobile energy source and/or the energy quantity stored in the mobile energy source to the SEA, and/or
- recording the energy flow from the internal energy network to the mobile energy source and vice versa, as well as communicating the data recorded to the SEA.

6. The computerised method according to one of the preceding claims, **characterised in that** the SEA assumes at least one function taken from the following group:
- identifying the user of the system using biometric methods,
- providing an interface via which the user of the system can enquire or input information, wherein this information preferably includes plans of the user for utilising the energy consumers,
- managing and updating information regarding the user of the system (user profile), which in particular also includes the planned utilisation of energy consumers,
- preparing the plan for optimised energy usage in the system,
- regulating the energy flow through controlling and/or programming the energy controller, wherein preferably regulation of the energy flow includes at least one measure taken from the following group: selective output throttling, output increase, selective switching on or switching off of individual energy consumers or groups of energy consumers, selectively connecting or disconnecting stationary energy sources connected to the system-internal energy network,
- enquiring the state of the energy controller, in particular its current switching state,
- establishing and/or maintaining a secure communications link to the SA and/or the energy controller and/or the CA.

## Revendications

1. Procédé assisté par ordinateur pour la compensation automatique des pics de charge pour l'optimisation de l'utilisation d'énergie dans un système local comprenant un ou plusieurs consommateur(s) d'énergie, **caractérisé en ce que** le procédé comprend au moins les étapes suivantes :
a) mise à disposition d'au moins trois agents différents, lesquels se trouvent dans trois domaines principaux (domaine domestique, station et source d'énergie mobile) distincts dans l'espace,
- au moins un agent (Smart Energy Agent, SEA) étant exécuté sur un ordinateur, lequel est associé à un réseau d'énergie interne au système auquel sont raccordés les consommateurs d'énergie,
- au moins un agent (Car Agent, CA) étant exécuté sur un ordinateur, lequel est associé à une source d'énergie mobile,
- au moins un agent (Station Agent, SA) étant exécuté sur un ordinateur, lequel est associé à une ou plusieurs station(s) de raccordement fixe pour sources d'énergie mobiles, les stations de raccordement étant raccordées au réseau d'énergie interne au système,
- les agents surveillant des situations, anticipant le comportement du système ou de l'utilisateur, exécutant des optimisations du déroulement du système, reconnaissant des erreurs et communiquant de manière correspondante et corrigeant,
b) établissement d'un plan pour une utilisation d'énergie optimisée dans le système sur la base au moins des informations suivantes :
- quantités d'énergie E₁-E_{K} (K ∈ IN; K ≥ 1), lesquelles sont accumulées dans un certain nombre de sources d'énergie mobiles Q₁-Q_{K} (K ∈ IN; K ≥ 1),
- utilisation de l'énergie dans le système aux instants T₁-T_{c} (C ∈ IN; C ≥ 1) ou un sous-ensemble de ceux-ci,
moyennant quoi l'établissement du plan a lieu grâce à un agent, l'agent étant de préférence le SEA,
c) régulation du flux d'énergie, au moins entre
- des sources d'énergie mobiles, lesquelles sont raccordées à des stations du système et
- les consommateurs d'énergie du système,
moyennant quoi sur la base du plan établi, la régulation s'effectue directement ou indirectement via un agent, l'agent étant de préférence le SEA;
d) le SA assurant au moins les fonctions suivantes:
- détermination pour savoir quand une source d'énergie mobile s'approche de la station, moyennant quoi l'on préfère qu'il soit déterminé, grâce à un signal radio, si une source d'énergie mobile s'approche de la station et/ou si une source d'énergie mobile se trouve à proximité de la station et/ou
- établissement et/ou maintien d'une liaison de communication sûre avec le CA et/ou le SEA, et/ou
- échange de données d'authentification avec le CA, et/ou
- réalisation d'un processus handshake avec le CA, moyennant quoi, après la transmission par le CA des données d'authentification correctes au SA, on raccorde la source d'énergie mobile au réseau d'énergie interne au système à l'aide d'un dispositif de transmission d'énergie et
e) l'échange d'informations entre les agents ayant lieu sous la forme d'ontologies, celles-ci étant des jeux de données décrivant des états, lesquels permettent une action ciblée des agents,
moyennant quoi les agents travaillent ensemble grâce à leurs capacités communicatives entre eux, peuvent effectuer des calculs de manière autonome et sont ainsi en mesure de réguler de manière autonome l'utilisation d'énergie locale dans un réseau non public.

2. Procédé assisté par ordinateur selon la revendication 1, **caractérisé en ce que** l'établissement du plan pour une utilisation d'énergie optimisée dans le système s'effectue sur la base d'au moins un jeu de données, lequel provient du groupe suivant:
- la consommation d'énergie globale estimée Z aux (futurs) instants T_{G}-T_{H} (G,H ∈ IN; C≤G≤H), la consommation d'énergie d'un ou plusieurs des consommateurs d'énergie étant mesurée aux instants T₁-T_{C} (C ∈ IN; C ≥ 1) ou bien un sous-ensemble de ceux-ci, moyennant quoi un agent calcule, à partir de la consommation d'énergie aux instants T₁-T_{C} (C ∈ IN; C ≥ 1) ou un sous-ensemble de ceux-ci, la consommation d'énergie globale G aux instants T_{D}-T_{E} (D,E ∈ IN; 1≤D≤E≤C) et ensuite, sur la base au moins de la consommation d'énergie globale G aux instants T_{D}-T_{E} ou un sous-ensemble de ceux-ci, un calcul de la consommation d'énergie globale estimée Z aux (futurs) instants T_{G}-T_{H} (G,H ∈ IN; C≤G≤H) étant réalisé, ainsi qu'une utilisation planifiée, déterminée par un utilisateur du système, de consommateurs d'énergie aux instants T_{G}-T_{H} ou un sous-ensemble de ceux-ci, laquelle est transmise par l'utilisateur à un agent au moyen d'une interface utilisateur,
- la quantité d'énergie mesurée par des dispositifs de mesure, laquelle a été amenée à une ou plusieurs sources d'énergie aux instants T₁-T_{C} ou un sous-ensemble de ceux-ci ou bien a été prélevée de celles-ci, ,
- une charge et/ou décharge planifiée, fixée par un utilisateur, de sources d'énergies aux instants T_{G}-T_{H} ou un sous-ensemble de ceux-ci, laquelle est transmise par l'utilisateur à un agent au moyen d'une interface utilisateur,
- la disponibilité de courant d'un réseau électrique externe aux instants T_{G}-T_{H} ou un sous-ensemble de ceux-ci, le réseau électrique externe étant relié au réseau d'énergie interne au système au moyen d'un dispositif de transmission d'énergie et le réseau électrique externe étant de préférence l'alimentation électrique publique,
- la disponibilité de combustibles et la quantité de ceux-ci pour l'exploitation de sources d'énergie stationnaires,
- le résultat d'un calcul, lequel est effectué par un agent, afin de déterminer quelle quantité de la consommation d'énergie globale estimée Z aux instants T_{G}-T_{H} et/ou de la consommation d'énergie globale actuelle peut être couverte par E₁-E_{K},
- le prix du courant prévisible aux instants T_{G}-T_{H} ou un sous-ensemble de ceux-ci, le prix du courant étant prédit sur la base des tarifs usuels et/ou de tarifs climatiques spéciaux et/ou d'après le commerce de produits spot ou à terme à des bourses de l'électricité,
- les prix des carburants estimés aux instants T_{G}T_{H} ou un sous-ensemble de ceux-ci et les rendements des sources d'énergie stationnaires, lesquelles fonctionnent avec les carburants, les prix des carburants étant de préférence prédits sur la base des prix actuels des carburants,
- les conditions environnementales mesurées aux instants T₁-T_{C} ou un sous-ensemble de ceux-ci et les rendements des sources d'énergie stationnaires, lesquelles utilisent ces conditions environnementales pour la production d'énergie, les conditions environnementales étant de préférence la force du vent et/ou la température et/ou le rayonnement solaire et/ou la longueur du jour,
- les conditions environnementales estimées aux instants T_{G}-T_{H} et les rendements des sources d'énergie stationnaires, lesquelles utilisent ces conditions environnementales pour la production d'énergie, les conditions environnementales étant de préférence au moins une caractéristique dans le groupe formé par la force du vent, la température, le rayonnement solaire, la longueur du jour, la saison et les quantités de précipitations,
- le résultat d'un calcul, lequel est réalisé pour un agent, afin de déterminer quelle quantité de la consommation globale d'énergie Z estimée aux instants T_{G}-T_{H} et /ou de la consommation d'énergie globale actuelle peut être couverte par une ou plusieurs source(s) d'énergie stationnaire(s) raccordée(s) au réseau d'énergie interne au système et/ou quelle quantité peut être couverte par E₁-Eₖ et/ou quelle quantité d'énergie peut être donnée à Q₁-Qₖ de manière à ce que : la valeur pour la consommation globale d'énergie Z majorée de l'énergie donnée à Q₁-Qₖ et déduction faite de la part couverte par E₁-Eₖ et déduction faite de là part couverte par les sources d'énergie stationnaires pendant les instants T_{G}-T_{H} présente des variations plus faibles que la consommation d'énergie globale estimée Z et/ou de manière à ce que les coûts pour couvrir la consommation d'énergie globale soient minimes.

3. Procédé assisté par ordinateur selon l'une des revendications précédentes, **caractérisé en ce que** la régulation du flux d'énergie s'effectue grâce à un dispositif, lequel présente des moyens pour la régulation et/ou la commutation de circuits électriques dans le réseau d'énergie interne (contrôleur d'énergie), le contrôleur d'énergie assurant de manière supplémentaire au moins les fonctions suivantes :
- enregistrement de la consommation d'énergie par les consommateurs d'énergie et/ou
- établissement et/ou maintien d'une liaison de communication sûre avec le SEA.

4. Procédé assisté par ordinateur selon l'une des revendications précédentes, **caractérisé en ce que** le CA assure au moins une fonction, laquelle provient du groupe suivant :
- mise à disposition d'une interface par l'intermédiaire de laquelle l'utilisateur de la source d'énergie mobile peut rechercher des informations et/ou saisir des informations, des plans pour l'utilisation de la source d'énergie mobile et/ou des indications concernant la quantité d'énergie minimale admissible dans la source d'énergie mobile faisant de préférence partie de ces informations,
- gestion et actualisation d'informations concernant l'utilisateur de la source d'énergie mobile (profil EQ), l'utilisation planifiée de la source d'énergie mobile en faisant en particulier également partie et moyennant quoi, dans le cas où, en ce qui concerne la source d'énergie mobile, il s'agit d'un véhicule, l'utilisation planifiée consiste de préférence en des trajets planifiés,
- enregistrement du trajet parcouru, du temps nécessaire à cet effet ainsi que de la consommation d'énergie associée et prédiction de la durée de trajets planifiés et de la consommation d'énergie associée lorsque, en ce qui concerne la source d'énergie mobile, il s'agit d'un véhicule,
- surveillance de l'état de la source d'énergie mobile et/ou de la quantité d'énergie accumulée dans la source d'énergie mobile et communication de l'état et/ou de la quantité d'énergie au SA,
- mise en oeuvre de mesures correctives en cas d'état critique de la source d'énergie mobile et/ou en cas de dépassement par le bas d'une quantité d'énergie déterminée dans la source d'énergie mobile,
- régulation du flux d'énergie à partir de la source d'énergie mobile et vers celle-ci,
- établissement et/ou maintien d'une liaison de communication sûre avec le SA,
- échange de données d'authentification avec le SA et/ou transmission de données d'authentification au SA.

5. Procédé assisté par ordinateur selon l'une des revendications précédentes, **caractérisé en ce que** le SA assure de manière supplémentaire au moins les fonctions suivantes :
- fonction en tant que passerelle de communication entre le SEA et le CA, en particulier pour la communication de l'état de la source d'énergie mobile et/ou de la quantité d'énergie accumulée dans la source d'énergie mobile à l'attention du SEA, et/ou
- enregistrement du flux d'énergie depuis le réseau d'énergie interne vers la source d'énergie mobile et vice versa, ainsi que communication des enregistrements au SEA.

6. Procédé assisté par ordinateur selon l'une des revendications précédentes, **caractérisé en ce que** le SEA assure au moins une fonction, laquelle provient du groupe suivant :
- Identification de l'utilisateur du système via un procédé biométrique,
- mise à disposition d'une interface par l'intermédiaire de laquelle l'utilisateur du système peut rechercher des informations et/ou saisir des informations, des plans de l'utilisateur pour l'utilisation des consommateurs d'énergie faisant de préférence partie de ces informations,
- gestion et actualisation d'informations concernant l'utilisateur du système (profil utilisateur), l'utilisation planifiée de consommateurs d'énergie en faisant en particulier également partie,
- établissement du plan pour une utilisation d'énergie optimisée dans le système,
- régulation du flux d'énergie grâce à une commande et/ou programmation du contrôleur d'énergie, moyennant quoi l'on préfère que la régulation du flux d'énergie comporte en outre au moins une mesure, laquelle provient du groupe suivant : réduction de puissance ciblée, augmentation de puissance ciblée, mise en ou hors circuit ciblée de consommateurs d'énergie individuels ou de groupes de consommateurs d'énergie, mise en ou hors circuit ciblée de sources d'énergie stationnaires, lesquelles sont raccordées au réseau d'énergie interne au système,
- consultation de l'état du contrôleur d'énergie, en particulier de la commutation actuelle de celui-ci,
- établissement et/ou maintien d'une liaison de communication sûre avec le SA et/ou le contrôleur d'énergie et/ou le CA.
